(19) Europäisches Patentamt
European Patent Office
Office européen des brevets

(11) **EP 4 579 597 A1**

(12) **EUROPEAN PATENT APPLICATION**
published in accordance with Art. 153(4) EPC

(43) Date of publication:
02.07.2025 Bulletin 2025/27

(21) Application number: 23857025.3

(22) Date of filing: 14.07.2023

(51) International Patent Classification (IPC):
*G06T 9/40* (2006.01)

(52) Cooperative Patent Classification (CPC):
G06T 9/40

(86) International application number:
PCT/JP2023/025991

(87) International publication number:
WO 2024/042909 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.08.2022 US 202263401309 P
17.11.2022 US 202263426137 P
28.12.2022 US 202263435635 P

(71) Applicant: Panasonic Intellectual Property
Corporation
of America
Torrance, CA 90504 (US)

(72) Inventors:
• ITO, Atsushi
Kadoma-shi, Osaka 571-0057 (JP)
• SUGIO, Toshiyasu
Kadoma-shi, Osaka 571-0057 (JP)
• IGUCHI, Noritaka
Kadoma-shi, Osaka 571-0057 (JP)
• NISHI, Takahiro
Kadoma-shi, Osaka 571-0057 (JP)

(74) Representative: Grünecker Patent- und
Rechtsanwälte
PartG mbB
Leopoldstraße 4
80802 München (DE)

(54) **DECODING METHOD, ENCODING METHOD, DECODING DEVICE, AND ENCODING DEVICE**

(57)    A decoding method is a decoding method for decoding three-dimensional points, and includes: obtaining, from a bitstream, nodes that have an octree structure and are included in a first slice (S301); obtaining, from the bitstream, information for deriving a shape of a first node among the nodes (S302); and decoding the first node according to the information (S303). The shape is different from a default shape of another node among the nodes. For example, the shape may be a rectangular parallelepiped shape, and need not be a cubic shape.

FIG. 40

**Description**

[Technical Field]

The present disclosure relates to a decoding method, an encoding method, a decoding device, and an encoding device.

[Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.
Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).
Meanwhile, point cloud compression is partially supported by, for example, an open-source library (Point Cloud Library) for point cloud-related processing.
Furthermore, a technique for searching for and displaying a facility located in the surroundings of the vehicle by using three-dimensional map data is known (see, for example, Patent Literature (PTL) 1).

[Citation List]

[Patent Literature]

[PTL 1] International Publication WO 2014/020663

[Summary of Invention]

[Technical Problem]

In such encoding methods and decoding methods, there is a demand for improving encoding efficiency.
The present disclosure has as an object to provide a decoding method, an encoding method, a decoding device, or an encoding device capable of improving encoding efficiency.

[Solution to Problem]

A decoding method according to an aspect of the present disclosure is a decoding method for decoding three-dimensional points, and includes: obtaining, from a bitstream, nodes that have an octree structure and are included in a first slice; obtaining, from the bitstream, information for deriving a shape of a first node among the nodes; and decoding the first node according to the information, wherein the shape is different from a default shape of an other node among the nodes.
An encoding method according to an aspect of the present disclosure is an encoding method for encoding three-dimensional points, and includes: encoding nodes that have an octree structure and are included in a first slice, to generate a bitstream; and storing, in the bitstream, information for deriving a shape of a first node among the nodes, wherein the shape is different from a default shape of an other node among the nodes.

[Advantageous Effects of Invention]

The present disclosure can provide a decoding method, an encoding method, a decoding device, or an encoding device that is capable of improving encoding efficiency.

[Brief Description of Drawings]

[FIG. 1]

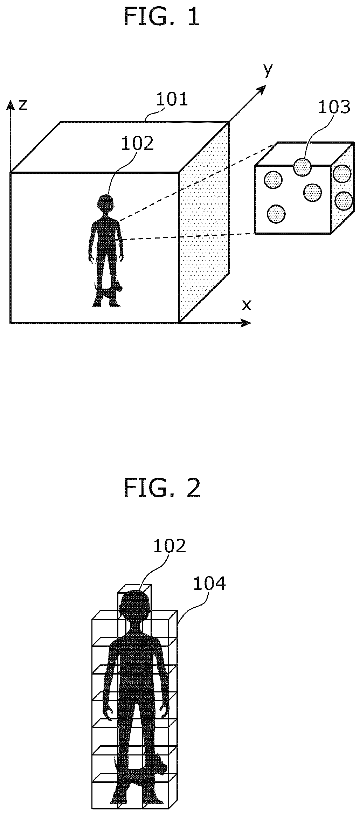

FIG. 1 is a diagram illustrating an example of an original point cloud according to an embodiment.
[FIG. 2]
FIG. 2 is a diagram illustrating an example of a trimmed octree according to the embodiment.
[FIG. 3]

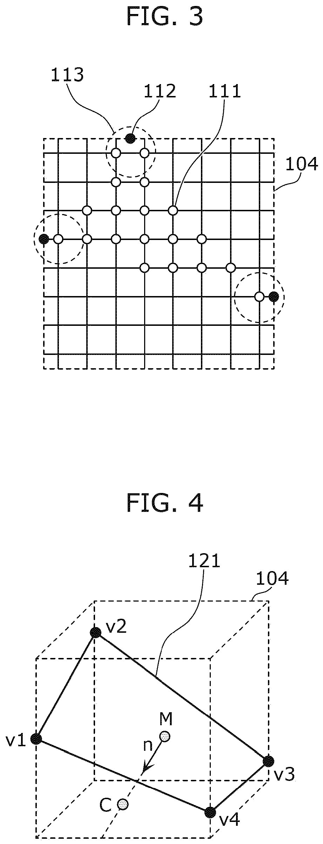

FIG. 3 is a diagram illustrating an example in which a leaf-node according to the embodiment is two-dimensionally displayed.
[FIG. 4]
FIG. 4 is a diagram for describing a method for generating a centroid vertex according to the embodiment.
[FIG. 5]

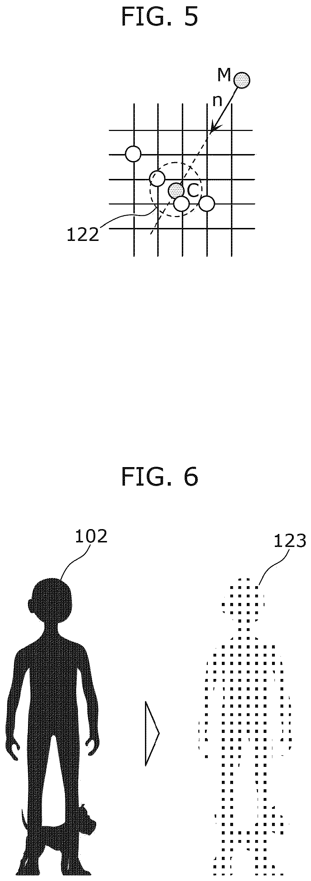

FIG. 5 is a diagram for describing the method for generating a centroid vertex according to the embodiment.
[FIG. 6]
FIG. 6 is a diagram illustrating an example of vertex information according to the embodiment.
[FIG. 7]

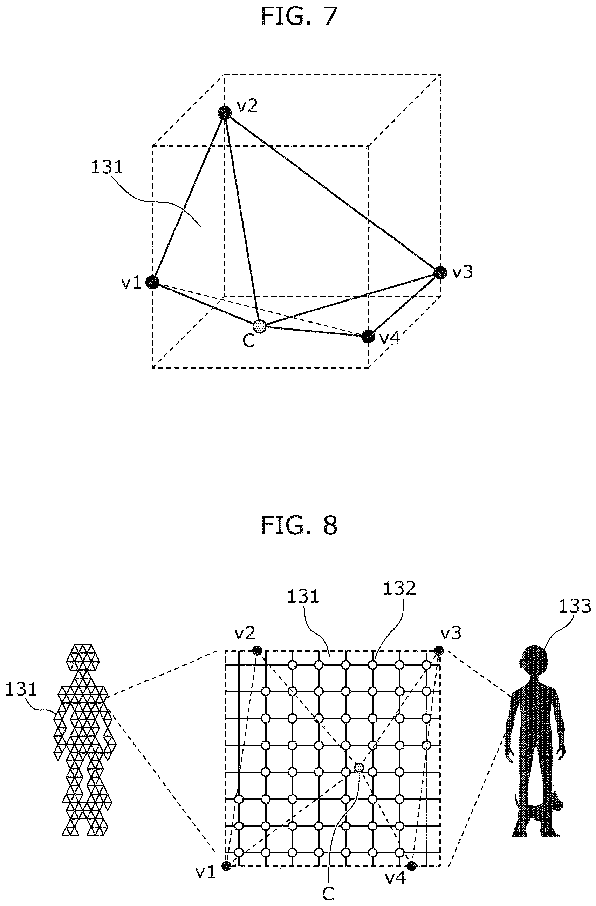

FIG. 7 is a diagram illustrating an example of a TriSoup surface according to the embodiment.
[FIG. 8]
FIG. 8 is a diagram for describing point cloud reconstruction processing according to the embodiment.
[FIG. 9]

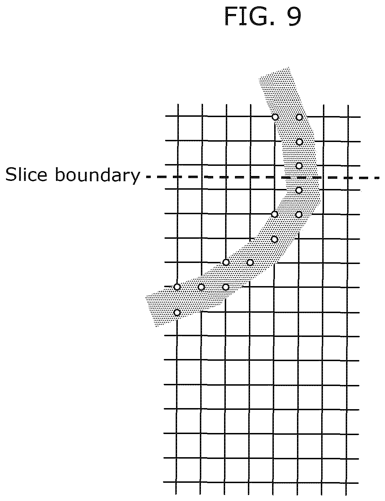

FIG. 9 is a diagram illustrating an example of slice division according to the embodiment.
[FIG. 10]

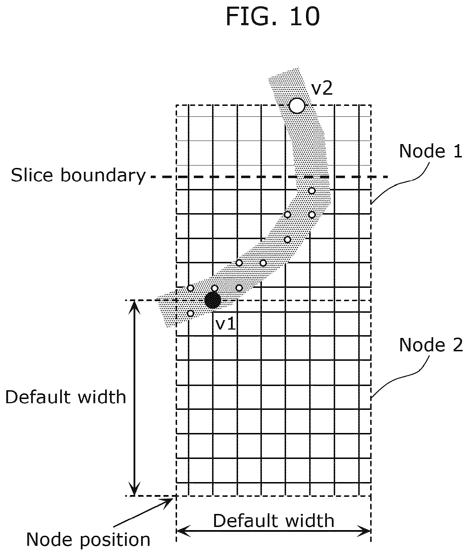

FIG. 10 is a diagram illustrating an example of a vertex according to the embodiment.
[FIG. 11]

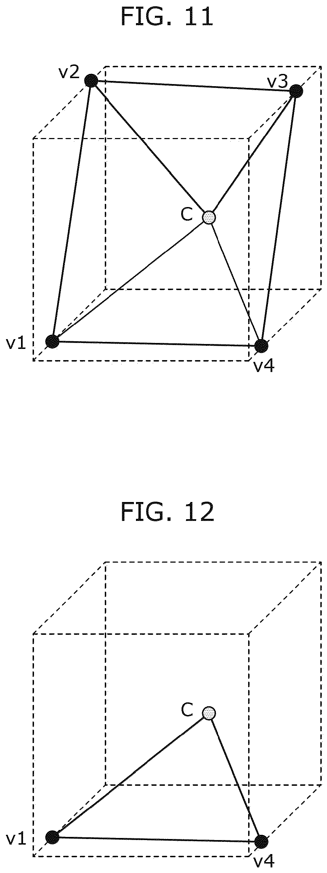

FIG. 11 is a diagram illustrating an example of a TriSoup surface that should usually be generated, according to the embodiment.
[FIG. 12]
FIG. 12 is a diagram illustrating an example of a TriSoup surface when an edge vertex according to the embodiment is not generated.
[FIG. 13]

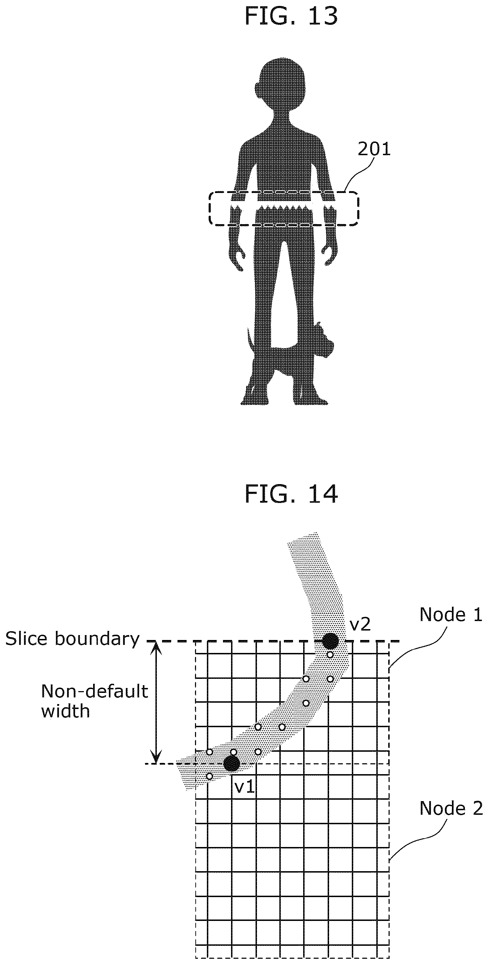

FIG. 13 is a diagram illustrating an example of a point cloud to be reconstructed according to the embodiment.
[FIG. 14]
FIG. 14 is a diagram illustrating an example of a vertex according to the embodiment.
[FIG. 15]

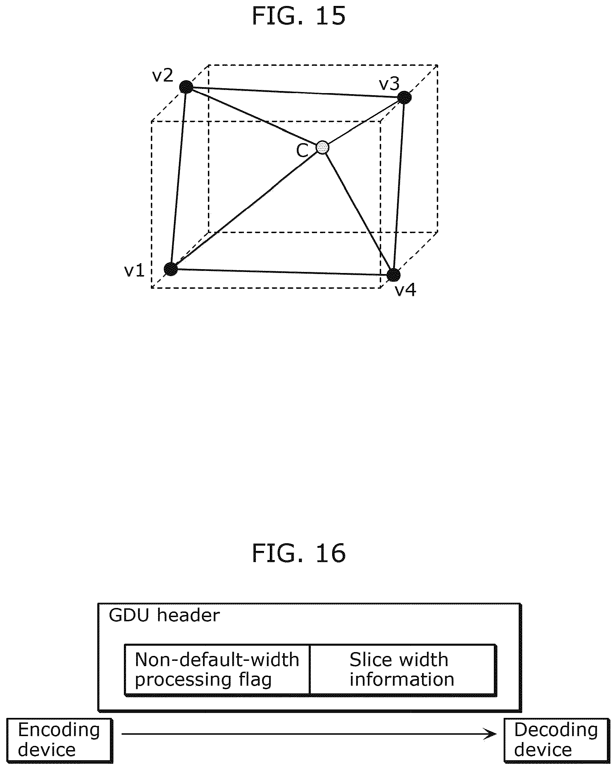

FIG. 15 is a diagram illustrating an example of a TriSoup surface according to the embodiment.
[FIG. 16]
FIG. 16 is a diagram illustrating an example of transfer information according to the embodiment.
[FIG. 17]

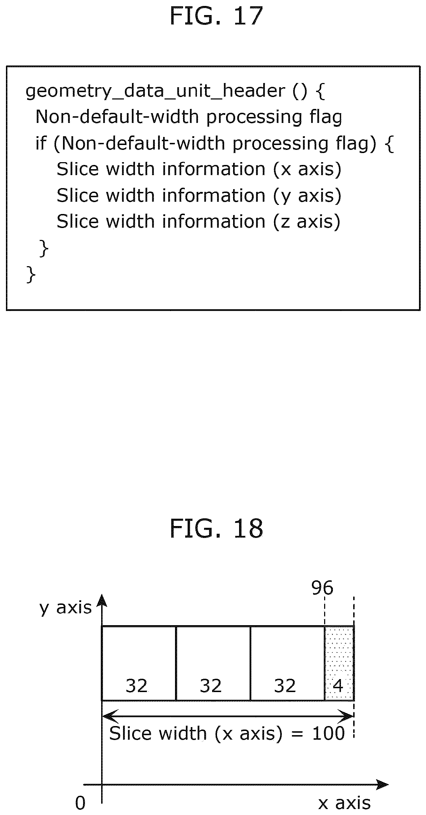

FIG. 17 is a diagram illustrating an example of a syntax of a GDU header according to the embodiment.
[FIG. 18]
FIG. 18 is a diagram illustrating an example of setting an adjusted width of a non-default-width node according to the embodiment.
[FIG. 19]

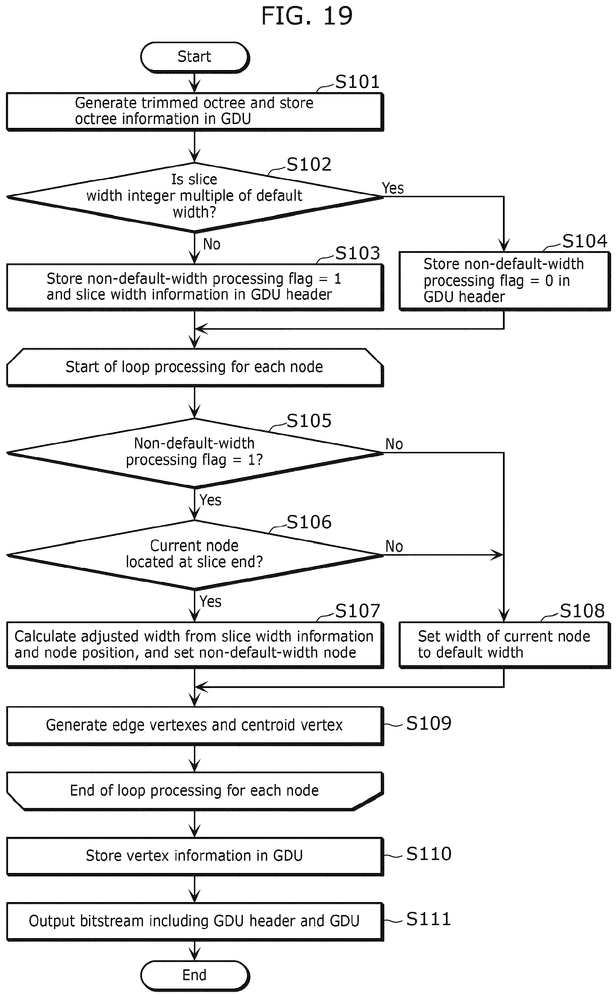

FIG. 19 is a flowchart of encoding processing by an encoding device according to the embodiment.
[FIG. 20]

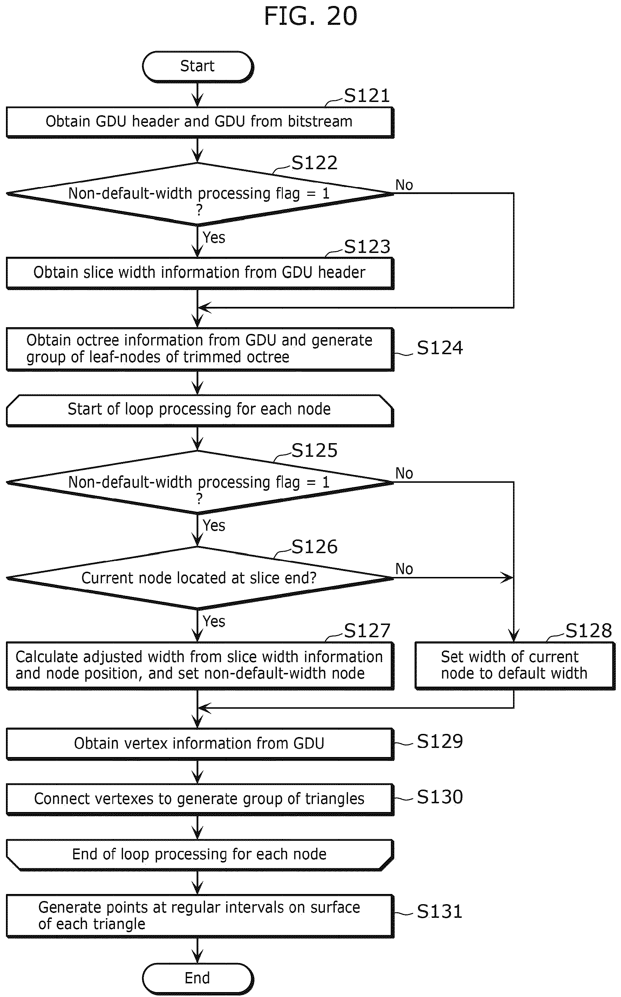

FIG. 20 is a flowchart of decoding processing by a decoding device according to the embodiment.
[FIG. 21]

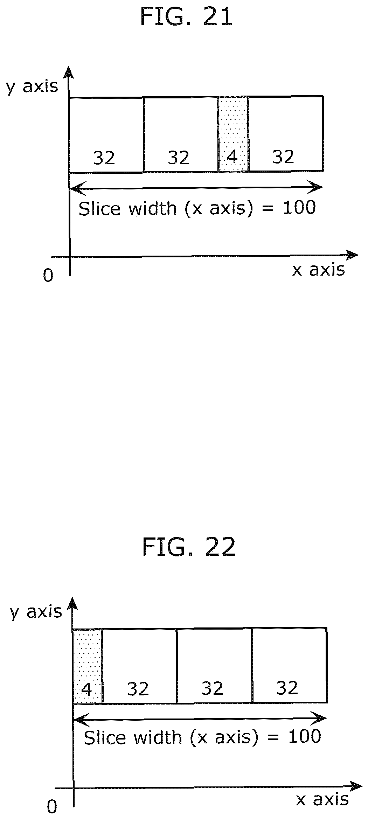

FIG. 21 is a diagram illustrating an example of setting non-default-width nodes according to the embodiment.
[FIG. 22]
FIG. 22 is a diagram illustrating an example of setting non-default-width nodes according to the embodiment.
[FIG. 23]

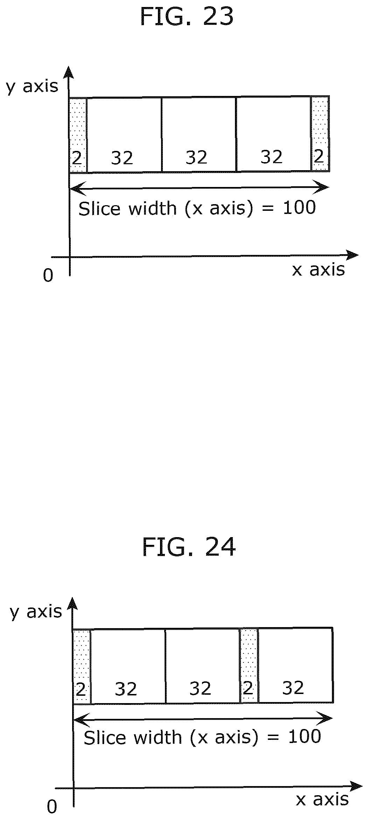

FIG. 23 is a diagram illustrating an example of setting non-default-width nodes according to the embodiment.
[FIG. 24]
FIG. 24 is a diagram illustrating an example of setting non-default-width nodes according to the embodiment.
[FIG. 25]

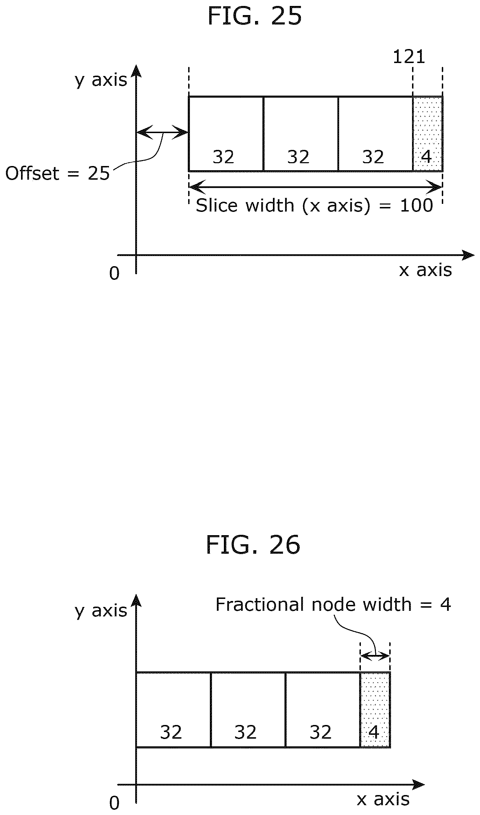

FIG. 25 is a diagram illustrating an example of setting non-default-width nodes according to the embodiment.
[FIG. 26]
FIG. 26 is a diagram illustrating an example of setting non-default-width nodes according to the embodiment.
[FIG. 27]

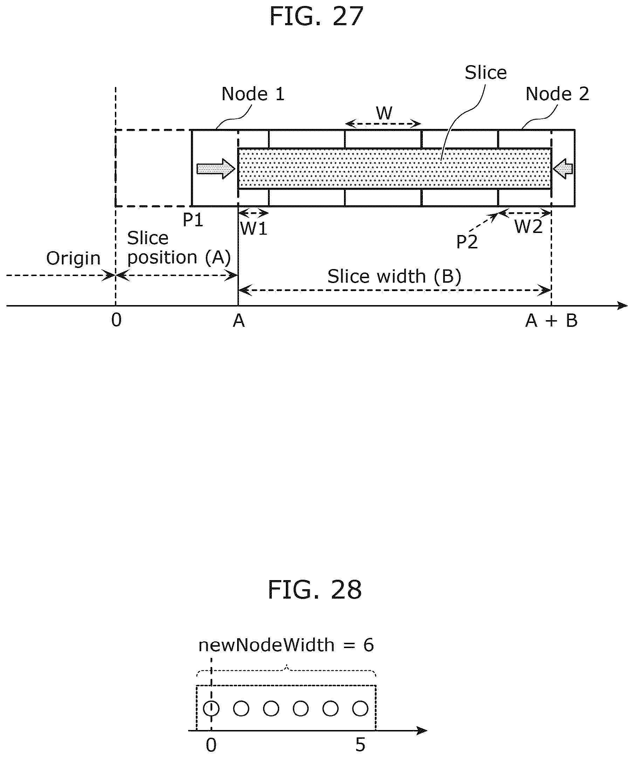

FIG. 27 is a diagram illustrating an example of setting non-default-width nodes according to the embodiment.

[FIG. 28]

FIG. 28 is a diagram illustrating the relationship between the node width and the internal point coordinate width according to the embodiment.

[FIG. 29]

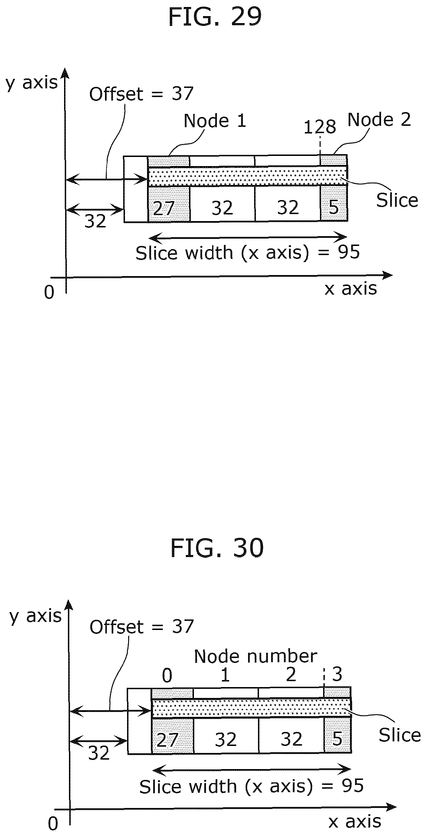

FIG. 29 is a diagram illustrating an example of setting non-default-width nodes according to the embodiment.

[FIG. 30]

FIG. 30 is a diagram illustrating an example of setting non-default-width nodes according to the embodiment.

[FIG. 31]

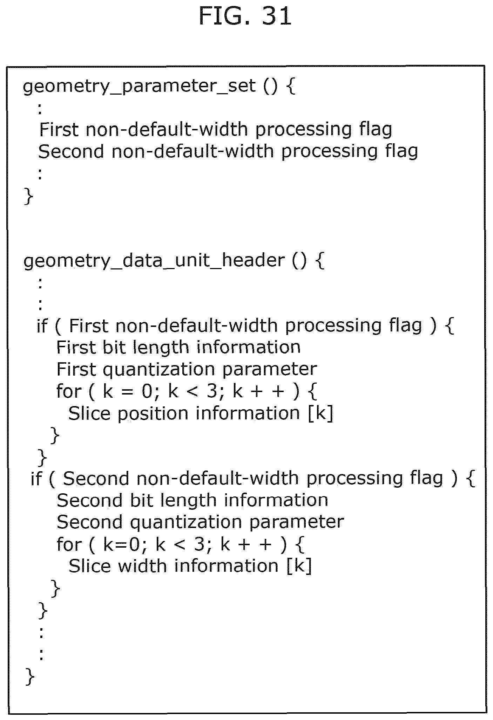

FIG. 31 is a diagram illustrating an example of a syntax of a GPS and GDU header according to the embodiment.

[FIG. 32]

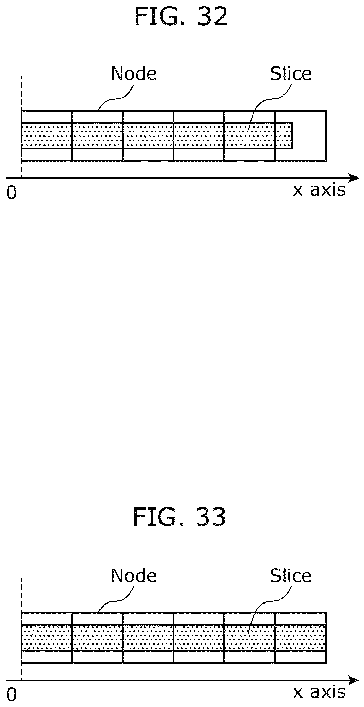

FIG. 32 is a diagram illustrating an example of a slice and a node according to the embodiment.

[FIG. 33]

FIG. 33 is a diagram illustrating an example of a slice and a node according to the embodiment.

[FIG. 34]

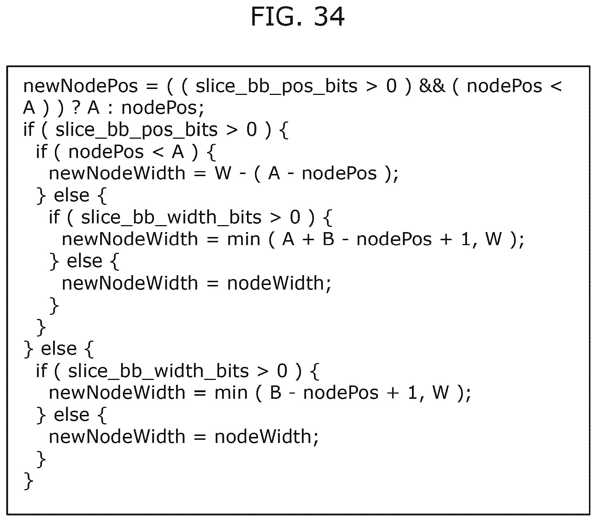

FIG. 34 is a diagram illustrating an example of processing when omission according to the embodiment is performed.

[FIG. 35]

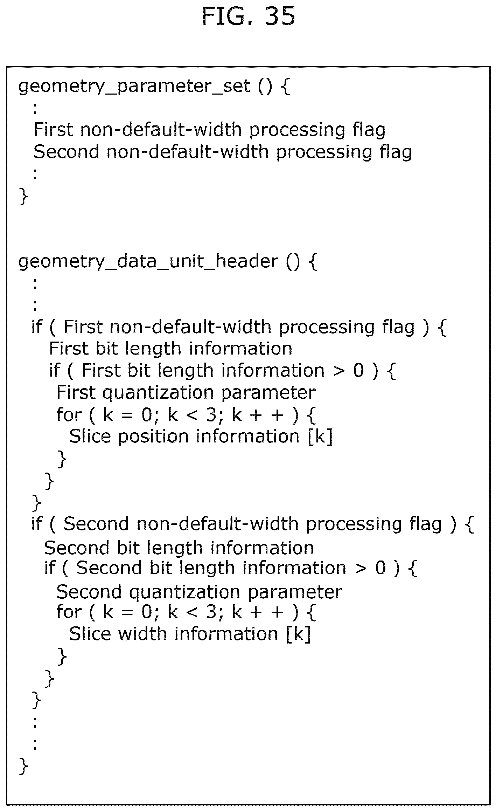

FIG. 35 is a diagram illustrating an example of a syntax of a GPS and GDU header according to the embodiment.

[FIG. 36]

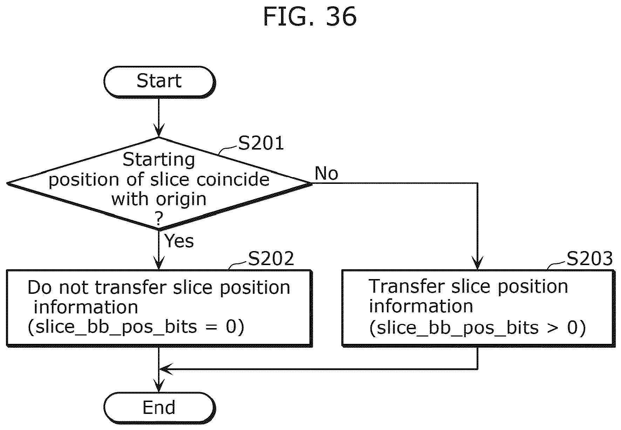

FIG. 36 is a flowchart of processing for determining omission of adjustment processing of a starting end according to the embodiment.

[FIG. 37]

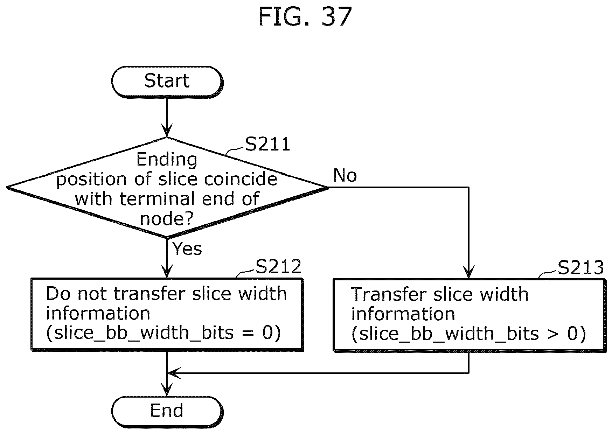

FIG. 37 is a flowchart of processing for determining omission of adjustment processing of an ending end according to the embodiment.

[FIG. 38]

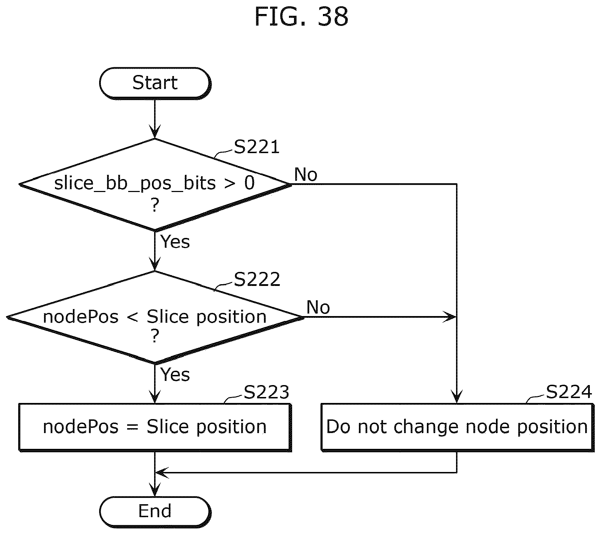

FIG. 38 is a flowchart of node position determination processing according to the embodiment.

[FIG. 39]

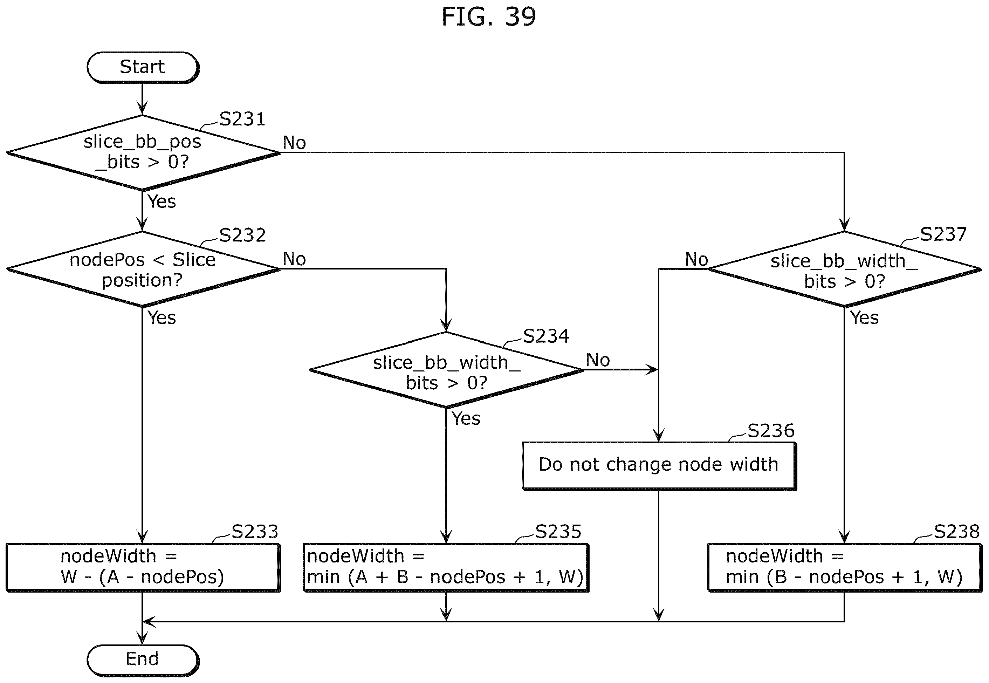

FIG. 39 is a flowchart of node position determination processing according to the embodiment.

[FIG. 40]

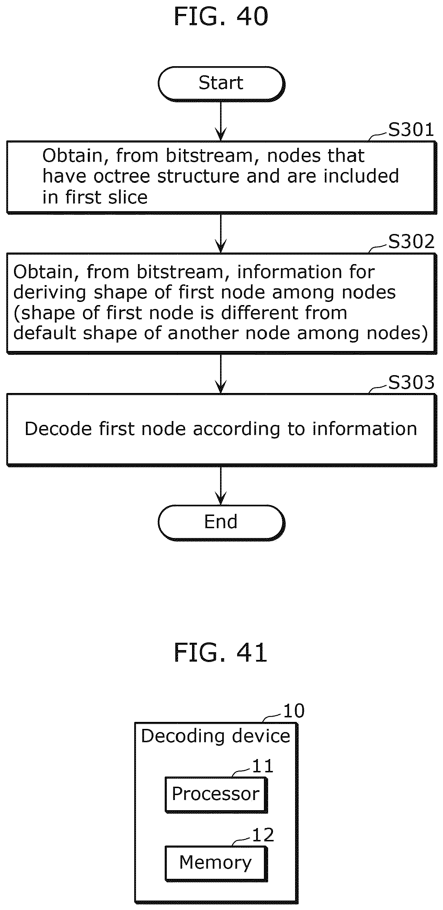

FIG. 40 is a flowchart of decoding processing according to the embodiment.

[FIG. 41]

FIG. 41 is a block diagram of the decoding device according to the embodiment.

[FIG. 42]

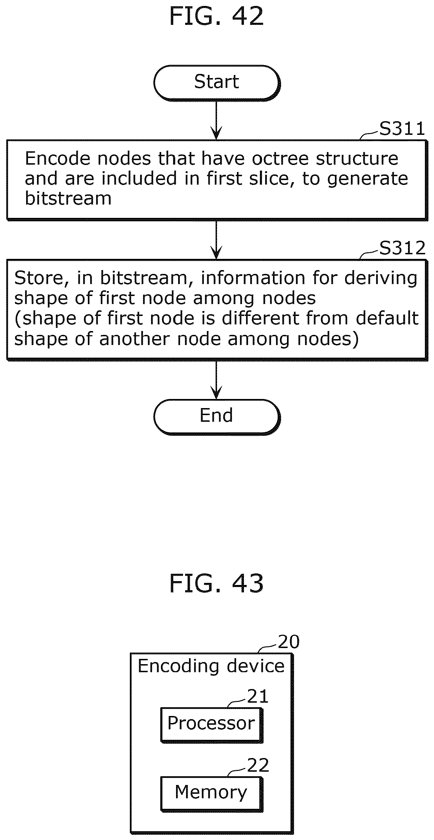

FIG. 42 is a flowchart of encoding processing according to the embodiment.

[FIG. 43]

FIG. 43 is a block diagram of the encoding device according to the embodiment.

[Description of Embodiments]

A decoding method according to an aspect of the present disclosure is a decoding method for decoding three-dimensional points, and includes: obtaining, from a bitstream, nodes that have an octree structure and are included in a first slice; obtaining, from the bitstream, information for deriving a shape of a first node among the nodes; and decoding the first node according to the information. The shape is different from a default shape of an other node among the nodes. Accordingly, a node that is of a shape different from the default shape can be set. Therefore, a variable node can be set in accordance with the size of a slice or the distribution condition of a point cloud. Therefore, it may be possible to improve coding efficiency.

For example, the shape may be a rectangular parallelepiped shape, and need not be a cubic shape. For example, an end of the first slice may coincide with an end of a node among the nodes. Accordingly, when the node end and the slice end do not coincide, the node end and the slice end can be made to coincide with each other. Therefore, since failure to generate a vertex in the node end can be inhibited, the occurrence of a blank region at a slice boundary can be suppressed. Therefore, the accuracy of point cloud to be decoded can be improved.

For example, the information may indicate a size of the shape or positions of both ends of an edge of the first node. Accordingly, the decoding device can generate a node that is of a shape different from the default shape by using the information.

For example, the information may include adjustment information for adjusting the default shape to the shape. Accordingly, the decoding device can generate a node that is of a shape different from the default shape by using the adjustment information. Furthermore, it may be possible to reduce the information amount compared to when the absolute amount of information on positions is to be sent.

For example, the decoding may be performed according to a compression scheme in which the three-dimensional points approximated with a plane or a curved surface within the first node. For example, the compression scheme may be a Triangle-Soup compression scheme.

For example, the shape may be determined in order that the plane or the curved surface is generated within the first node. Accordingly, by setting a node that is of a shape different from the default shape, the plane or the curved surface can be generated within the first node.

For example, an edge of the shape may have a vertex thereon, and the plane or the curved surface may intersect with the edge at the vertex. Accordingly, by setting a node that is of a shape different from the default shape, the plane or the curved surface can be generated within the first node.

For example, the first node may be provided in contact with a second slice adjacent to the first slice. Accordingly, for example, this can prevent failure to generate a vertex at a node end due to misalignment between the node end and a slice end, thereby preventing the occurrence of a blank region at the slice boundary. For example, if only default-shape nodes are provided around the slice boundary, the slice boundary may divide a node. This may reduce the accuracy of reconstructing the three-dimensional point cloud around the slice boundary, because the point cloud in the second slice adjacent to the first slice cannot be used to encode or decode the first node. To address this, this aspect sets a node of a shape different from the default shape to enable, for example, an end of the first node to coincide with an end of the first slice. This can prevent a reduction in the accuracy of reconstructing the three-dimensional point cloud around the slice boundary. It should be noted that applying this aspect to the TriSoup scheme can prevent failure to appropriately generate edge vertexes.

For example, the information may be provided per slice, the information for the second slice may be used to derive a shape of a second node among nodes that have the octree structure and are included in the second slice, and the shape of the second node may be different from the default shape. Accordingly, the shape of a node can be set per slice.

For example, a size of the default shape may be represented by a power of 2, and a size of the shape may be different from a size represented by a power of 2.

For example, the shape of the first node may be defined by a first length along a first direction, a second length along a second direction, and a third length along a third direction, the first direction, the second direction, and the third direction being orthogonal to each other, and among the first length, the second length, and the third length, it is acceptable that only the first length is different from a default length of the other node, or among the first length, the second length, and the third length, it is acceptable that only the first length and the second length are each different from the default length.

For example, among the nodes, the first node may be provided closest to an origin of the first slice in one direction among a first direction, a second direction, and a third direction, the first direction, the second direction, and the third direction being orthogonal to each other. Accordingly, when the starting position of a slice does not coincide with the origin, the starting position of the node can be adjusted in accordance with the starting position of the slice, for example.

For example, the nodes may include a third node that is of a shape different from the default shape, and among the nodes, the third node may be provided farthest from the origin in the one direction. Accordingly, when the ending position of a slice does not coincide with the ending position of a node, the ending position of the node can be adjusted in accordance with the ending position of the slice, for example.

For example, when a starting position of the first slice does not coincide with an origin, the bitstream may include the information, and when the starting position of the first slice coincides with the origin, the bitstream need not include the information. Accordingly, the occurrence of processing for adjusting the shape of the node can be reduced. Furthermore, the transfer of information for deriving the shape of the node can be omitted. Therefore, the reduction of processing amount and the reduction of the data amount of the bitstream can be realized.

For example, when an ending position of the first slice does not coincide with an ending end of the first node, the bitstream may include the information, and when the ending position of the first slice coincides with the ending end of the first node, the bitstream need not include the information. Accordingly, the occurrence of processing for adjusting the shape of the node can be reduced. Furthermore, the transfer of information for deriving the shape of the node can be omitted. Therefore, the reduction of processing amount and the reduction of the data amount of the bitstream can be realized.

An encoding method according to an aspect of the present disclosure is an encoding method for encoding three-dimensional points, and includes: encoding nodes that have an octree structure and are included in a first slice, to generate a bitstream; and storing, in the bitstream, information for deriving a shape of a first node among the nodes. The shape is different from a default shape of an other node among the nodes. Accordingly, a node that is of a shape different from the default shape can be set. Therefore, a variable node can be set in accordance with the size of a slice or the distribution condition of a point cloud. Therefore, it may be possible to improve coding efficiency.

Furthermore, a decoding device according to an aspect of the present disclosure is a decoding device that decodes three-dimensional points, and includes: a processor; and memory. Using the memory, the processor: obtains, from a bitstream, nodes that have an octree structure and are included in a first slice; obtains, from the bitstream, information for deriving a shape of a first node among the nodes; and decodes the first node according to the information. The shape is different from a default shape of an other node among the nodes.

Furthermore an encoding device according to an aspect of the present disclosure is an encoding device that encodes three-dimensional points, and includes: a processor; and memory. Using the memory, the processor: encodes nodes that have an octree structure and are included in a first slice, to generate a bitstream; and stores, in the bitstream, information for deriving a shape of a first node among the nodes. The shape is different from a default shape of an other node among the nodes.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

[EMBODIMENT]

Hereinafter, an encoding device (three-dimensional data encoding device) and a decoding device (three-dimensional data decoding device) according to the present embodiment will be described. The encoding device encodes three-dimensional data to thereby generate a bitstream. The decoding device decodes the bitstream to thereby generate three-dimensional data.

Three-dimensional data is, for example, three-dimensional point cloud data (also called point cloud data). A point cloud, which is a set of three-dimensional points, represents the three-dimensional shape of an object. The point cloud data includes position information and attribute information on the three-dimensional points. The position information indicates the three-dimensional position of each three-dimensional point. It should be noted that position information may also be called geometry information. For example, the position information is represented using an orthogonal coordinate system or a polar coordinate system.

Attribute information indicates color information, reflectance, infrared information, a normal vector, or time-of-day information, for example. One three-dimensional point may have a single item of attribute information or have a plurality of kinds of attribute information.

It should be noted that although mainly the encoding and decoding of position information will be described below, the encoding device may perform encoding and decoding of attribute information.

[TriSoup scheme]

The encoding device according to the present embodiment encodes position information by using a Triangle-Soup (TriSoup) scheme.

The TriSoup scheme is an irreversible compression scheme for encoding position information on point cloud data. In the TriSoup scheme, an original point cloud being processed is replaced by a set of triangles, and the point cloud is approximated on the planes of the triangles. Specifically, the original point cloud is replaced by vertex information on vertexes within each node, and the vertexes are connected with each other to form a group of triangles. Furthermore, the vertex information for generating the triangles is stored in a bitstream, which is sent to the decoding device.

Now, encoding processing using the TriSoup scheme will be described. FIG. 1 is a diagram illustrating an example of an original point cloud. As shown in FIG. 1, point cloud 102 of an object is in target space 101 and includes points 103.

First, the encoding device divides the original point cloud into an octree up to a predetermined depth. In octree division, a target space is divided into eight nodes (subspaces), and 8-bit information (an occupancy code) indicating whether each node includes a point cloud is generated. A node that includes a point cloud is further divided into eight nodes, and 8-bit information indicating whether these eight nodes each include a point cloud is generated. This processing is repeated up to a predetermined layer.

Here, typical octree encoding divides nodes until the number of point clouds in each node reaches, for example, one or a threshold. In contrast, the TriSoup scheme performs octree division up to a layer along the way and not for layers lower than that layer. Such an octree up to a midway layer is called a trimmed octree.

FIG. 2 is a diagram illustrating an example of a trimmed octree. As shown in FIG. 2, point cloud 102 is divided into leaf-nodes 104 (lowest-layer nodes) of a trimmed octree.

The encoding device then performs the following processing for each leaf-node 104 of the trimmed octree. It should be noted that a leaf-node may hereinafter also be simply referred to as a node. The encoding device generates vertexes on edges of the node as representative points of the point cloud near the edges. These vertexes are called edge vertexes. For example, an edge vertex is generated on each of a plurality of edges (for example, four parallel edges).

FIG. 3 is a diagram illustrating an example of two-dimensional display of leaf-node 104, for example, the xy-plane viewed along the z-direction shown in FIG. 1. As shown in FIG. 3, edge vertexes 112 are generated on edges based on points near the edges, among points 111 within leaf-node 104.

It should be noted that the dotted lines in FIG. 3 along the perimeter of leaf-node 104 represent the edges. Also in this example, each edge vertex 112 is generated at a weighted average of the positions of points within the distance 1 from the corresponding edge (points within each range 113 in FIG. 3). It should be noted that the unit of distance may be, by way of example and not limitation, the resolution of the point cloud. Although the distance (the threshold) is 1 in this example, the distance may be a value other than 1 or may be variable.

The encoding device then generates a vertex inside the node as well, based on a point cloud located in the direction of the normal to the plane that includes edge vertexes. This vertex is called a centroid vertex.

FIGS. 4 and 5 are diagrams for describing a method for generating the centroid vertex. First, the encoding device selects, for example, four points as representative points from a group of edge vertexes. In the example shown in FIG. 4, edge vertexes v1 to v4 are selected. The encoding device then calculates approximate plane 121 passing through the four points. The encoding device then calculates normal n to approximate plane 121 and average coordinates M of the four points. The encoding device then generates centroid vertex C at weighted-average coordinates of one or more points near a half line extending along normal n from average coordinates M (e.g., points within range 122 shown in FIG. 5).

The encoding device then entropy-encodes vertex information, which is information on the edge vertexes and the centroid vertex, and stores the encoded vertex information in a geometry data unit (hereinafter referred to as a GDU) included in the bitstream. It should be noted that, in addition to the vertex information, the GDU includes information indicating the trimmed octree.

FIG. 6 is a diagram illustrating an example of the vertex information. The above processing transforms point cloud 102 into vertex information 123, as shown in FIG. 6.

Now, decoding processing for the bitstream generated as above will be described. First, the decoding device decodes the GDU from the bitstream to obtain the vertex information. The decoding device then connects the vertexes to generate a TriSoup surface, which is a group of triangles.

FIG. 7 is a diagram illustrating an example of the TriSoup surface. In the example shown in FIG. 7, four edge vertexes v1 to v4 and centroid vertex C are generated based on the vertex information. Furthermore, triangles 131 (a TriSoup surface) are generated, each having centroid vertex C and two edge vertexes as its vertexes. For example, a pair of two edge vertexes on a pair of two adjacent edges is selected to form triangle 131 having the selected pair of edge vertexes and the centroid vertex as its vertexes.

FIG. 8 is a diagram for describing point cloud reconstruction processing. The above processing is performed for each leaf-node to generate a three-dimensional model that represents the object with triangles 131, as shown in FIG. 8.

The decoding device then generates points 132 at regular intervals on the surface of triangles 131 to reconstruct the position information on point cloud 133.

[Slice boundary processing]

The following will describe a case in which a point cloud is divided into slices and encoded using the TriSoup scheme. In this case, if the slice width is not an integer multiple of the leaf-node width, point reconstruction may fail at a slice boundary. Specifically, if a point cloud spreads across a first slice and a second slice adjacent to each other, a leaf-node belonging to the first slice and located across the first and second slices causes the problem of a blank region occurring inside the node. This is because the node does not include the point cloud portion included in the second slice.

Due to the blank region, an edge of the node in contact with the blank region has no point cloud near the edge. Therefore, no edge vertex can be generated on the edge. If an edge vertex were generated in this situation, the vertex position would not reflect the actual point cloud distribution because of the distance between the edge and the point cloud. This would result in the problem of poor accuracy of the decoded point cloud.

FIG. 9 is a diagram illustrating an example in which a longitudinally extending portion of a point cloud is divided into slices. FIG. 10 is a diagram illustrating an example of a vertex generated in this case. In the example shown in FIG. 10, nodes having a default width partition the inside of a slice upward. In this case, node 1 at the upper end of the slice has a blank region. Thus, because of the absence of the point cloud near the upper edge, edge vertex v2 that should be generated on the edge cannot be generated. It should be noted that the slice boundary indicated in FIG. 9 and 10 is the boundary between the bounding boxes of the slices.

FIG. 11 is a diagram illustrating an example of a TriSoup surface that should usually be generated. FIG. 12 is a diagram illustrating an example of a TriSoup surface with some edge vertexes not generated, as illustrated in FIG. 10. As shown in FIG. 12, without edge vertexes v2 and v3 to be generated on upper edges, the TriSoup surface is generated with only vertexes v1 and v4 on lower edges and centroid vertex C. Thus, the TriSoup surface located in only the lower portion of the node is generated, rather than the TriSoup surface that would stretch over the inside of the node.

FIG. 13 is a diagram illustrating an example of a reconstructed point cloud in this case. As illustrated in FIG. 13, because no points are reconstructed in the portions with no TriSoup surfaces, the reconstructed point cloud has a horizontally extending hole as in region 201 shown in FIG. 13.

In the present embodiment, the width of a node located at an end of the bounding box of a slice is set to a width different from the default width. This can prevent the occurrence of a blank region in the node and allow the generation of an edge vertex that would otherwise not be generated due to the above-described problem.

FIG. 14 is a diagram illustrating an example of vertexes generated in this case. FIG. 15 is a diagram illustrating an example of a TriSoup surface in this case. As shown in FIG. 14, node 1 having a non-default width is provided at a slice end. This can prevent a blank in node 1 and allow the generation of edge vertex v2. Thus, as shown in FIG. 15, a TriSoup surface stretching over the inside of the node can be generated, preventing a horizontally extending hole from being created in the reconstructed point cloud.

Furthermore, the encoding device stores adjusted-width information, which is information for calculating the adjusted width of the non-default-width node. For example, the encoding device stores, in a GDU header, information indicating the slice width.

Here, the non-default-width node is a node in which the length of an edge along at least one of depth, width, and height is different from a default length (the default width). The non-default-width node is of a rectangular parallelepiped or cubic shape different from the cubic shape defined by the default width. Furthermore, the adjusted-width information is information for adjusting the default edge length of the node to the edge length of the adjusted width (the non-default width) different from the default width. For example, the adjusted-width information may indicate the length of the adjusted width itself, or may indicate the difference or ratio between the default width and the adjusted width.

For example, the adjusted width (the non-default width) of the non-default-width node is represented as min (the slice width - the node position, the default width). That is, the non-default width of a node is set to the smaller one of (the slice width - the node position) and the default width. Here, the node position is the position (the coordinates) of the corner closest to the origin among the corners of the node, as illustrated in FIG. 10.

In the above manner, an edge vertex can be generated in a node located at an end of the bounding box of a slice. This allows TriSoup surfaces to be disposed uninterruptedly, preventing the occurrence of a hole in the reconstructed point cloud.

As alternatives, the following exemplary manners may also be used. It should be noted that the following focuses on solving the problem from the perspective of encoding processing and a standard.

A point cloud included in the first slice is also included in the leaf-nodes of the second slice. That is, the first slice and the second slice have the same point cloud.

A point cloud is divided into slices such that the boundary coordinates between the first slice and the second slice match the leaf-node width. That is, the slice division avoids generating a node having a blank.

[Syntax]

The following will describe transfer information to be transmitted from the encoding device to the decoding device for implementing the above manner. For example, the transfer information is stored in the bitstream.

FIG. 16 is a diagram illustrating an example of the transfer information. As shown in FIG. 16, a GDU header in a bitstream includes a non-default-width processing flag and slice width information. The non-default-width processing flag is information indicating whether the above-described non-default-width node is set. For example, the value 1 indicates that the non-default-width node is set, whereas the value 0 indicates that the non-default-width node is not set. The slice width information indicates the slice width (the width of the bounding box of a slice).

FIG. 17 is a diagram illustrating an example of a syntax of the GDU header (geometry_data_unit_header). As shown in FIG. 17, the slice width information is stored in the GDU header only if the non-default-width processing flag takes the value 1 (true). Furthermore, the slice width information includes, for example, information indicating the widths along the x, y, and z axes of the slice, respectively.

The slice width information is information on a slice basis. Here, the non-default-width processing flag and the slice width information are stored in the GDU header, which is a header on a slice basis.

It should be noted that the non-default-width processing flag may be information indicating whether the bitstream includes the slice width information. Furthermore, the names of items, such as flags and information items, described in the present embodiment are exemplary and may be any other names.

FIG. 18 is a diagram illustrating an example of setting the adjusted width of a non-default-width node. As described above, the adjusted width is expressed as min (the slice width - the node position, the default width). FIG. 18 illustrates an example of setting the adjusted width along the x axis. In this example, the adjusted width = min (100 - 96, 32) = 4. It should be noted that the adjusted widths along the y- and z-axes can be calculated in the same manner.

It should be noted that the description here illustrates an example in which the non-default-width processing flag and the slice width information are stored on a slice basis. Alternatively, these information items may be common to a plurality of slices. In that case, these information items may be stored in a header higher than the GDU header, such as the SPS or GPS. SPS (Sequence Parameter Set) is metadata (a parameter set) that is common to a plurality of frames. GPS (Geometry Parameter Set) is metadata (parameter set) concerning encoding of position information. For example, GPS is metadata common to a plurality of frames.

Furthermore, a flag indicating whether these information items are stored in a higher header or on a slice basis may be stored in the SPS or GPS. In that case, where these information items are stored is switched based on the flag.

Furthermore, because these information items are used for processing specific to the TriSoup scheme, these information items may be stored in the bitstream only if the coding scheme is the TriSoup scheme.

[Processing flow]

Hereinafter, the flow of processing by the encoding device and the decoding device will be described. FIG. 19 is a flowchart of encoding processing by the encoding device.

First, the encoding device generates a trimmed octree and stores, in the GDU, octree information indicating the trimmed octree (S101). For example, the encoding device entropy-encodes the octree information and stores the encoded octree information in the GDU.

The encoding device then determines whether the slice width (the width of the bounding boxes of the slices) is an integer multiple of a default width (S102). If the slice width is not an integer multiple of the default width (No at S102), the encoding device stores the non-default-width processing flag = 1 and the slice width information in the GDU header (S103).

In contrast, if the slice width is an integer multiple of the default width (Yes at S102), the encoding device stores the non-default-width processing flag = 0 in the GDU header (S104).

The encoding device then performs the following processing at steps S105 to S109 for each of the leaf-nodes of the trimmed octree.

First, the encoding device determines whether the non-default-width processing flag = 1 (S105). If the non-default-width processing flag = 1 (Yes at S105), the encoding device determines whether the current node is located at a slice end (an end of the bounding box of a slice) (S106). For example, if the current node includes a slice boundary, the encoding device determines that the current node is located at a slice end; otherwise, the encoding device determines that the current node is not located at a slice end.

If the current node is located at a slice end (Yes at S106), the encoding device calculates an adjusted width from the slice width indicated by the slice width information and from the node position of the current node, and sets the current node as a non-default-width node having the calculated adjusted width (S107).

In contrast, if the non-default-width processing flag = 0 (No at S105) or if the current node is not located at a slice end (No at S106), the encoding device sets the width of the current node to the default width (S108).

The encoding device then generates, based on the point cloud distribution within the current node, edge vertexes on edges of the current node and a centroid vertex inside the current node (S109). Thus, the loop processing for the current node terminates.

Upon completion of the loop processing for all the leaf-nodes, the encoding device entropy-encodes vertex information indicating the edge vertexes and the centroid vertexes of the leaf-nodes, and stores the encoded vertex information in the GDU (S110).

The encoding device then generates a bitstream including the GDU header and the GDU and outputs the bitstream (S111). That is, the encoding device transfers the bitstream to the decoding device.

FIG. 20 is a flowchart of decoding processing by the decoding device. First, the decoding device obtains the GDU header and the GDU from the bitstream (S121). The decoding device then obtains the non-default-width processing flag from the GDU header and determines whether the non-default-width processing flag = 1 (S122).

If the non-default-width processing flag = 1 (Yes at S122), the decoding device obtains the slice width information from the GDU header (S123). In contrast, if the non-default-width processing flag = 0 (No at S122), the decoding device obtains no slice width information from the GDU header.

The decoding device then obtains the octree information from the GDU. For example, the decoding device obtains the octree information by entropy-decoding the encoded octree information included in the GDU. The decoding device then uses the octree information to generate a group of leaf-nodes of the trimmed octree (S124).

The decoding device then performs the following processing at steps S125 to S130 for each of the leaf-nodes of the trimmed octree.

First, the decoding device determines whether the non-default-width processing flag = 1 (S125). If the non-default-width processing flag = 1 (Yes at S125), the decoding device determines whether the current node is located at a slice end (an end of the bounding box of a slice) (S126). For example, if the current node includes a slice boundary, the decoding device determines that the current node is located at a slice end; otherwise, the decoding device determines that the current node is not located at a slice end.

If the current node is located at a slice end (Yes at S126), the decoding device calculates the adjusted width from the slice width indicated by the slice width information and from the node position of the current node, and sets the current node as a non-default-width node having the calculated adjusted width (S127).

In contrast, if the non-default-width processing flag = 0 (No at S125) or if the current node is not located at a slice end (No at S126), the decoding device sets the width of the current node to the default width (S128).

The decoding device then obtains, from the GDU, the vertex information indicating the positions of the edge vertexes and the centroid vertex (S129). For example, the decoding device obtains the vertex information by entropy-decoding the encoded vertex information included in the GDU.

The decoding device then generates a group of triangles by connecting the vertexes indicated by the vertex information (S130). Thus, the loop processing for the current node terminates.

Upon completion of the loop processing for all the leaf-nodes, the decoding device generates points at regular intervals on the surfaces of the triangles to generate a decoded point cloud (S131).

[Variations]

The above description illustrates an example in which a non-default-width node is generated at the termination of a slice (the right end in FIG. 18). However, the position where a non-default-width node is generated is not limited to the right end. FIGS. 21 to 24 are diagrams illustrating examples of setting non-default-width nodes.

For example, as illustrated in FIG. 21, a non-default-width node may be located in the middle of a slice. Alternatively, as illustrated in FIG. 22, a non-default-width node may be located at the beginning of a slice.

Furthermore, as illustrated in FIGS. 23 and 24, a plurality of non-default-width nodes may be set. For example, as shown in FIG. 23, two non-default-width nodes may be set at both ends of a slice. Alternatively, as shown in FIG. 24, two non-default-width nodes may be set at one end of and in the middle of a slice.

For a plurality of non-default-width nodes set as above, the widths of the non-default-width nodes may sum up to the above-described adjusted width.

In view of the above, the following will illustrate possible adjusted-width calculation manners and non-default-width node information, which is information stored in the bitstream and used for non-default-width nodes.

For a non-default-width node disposed at a position that is not the terminal end of a slice, as illustrated in FIGS. 21 and 22, the non-default-width node information includes adjusted-width information indicating the adjusted width, and insertion position information indicating the position at which the non-default-width node is inserted. For example, in the example shown in FIG. 21, the insertion position information indicates the bit string "4b0010". Furthermore, in the example shown in FIG. 22, the insertion position information indicates the bit string "4b1000". It should be noted that each bit of the bit string corresponds to a node, with 1 set for the bit corresponding to the non-default-width node, and 0 set for the rest of the bits.

As an alternative, the insertion position information may indicate information identifying the non-default-width node. For example, the nodes may be assigned serial numbers (identifiers), and the insertion position information may indicate the serial number of the non-default-width node. For example, the serial numbers may be set for each axis in the slice. In the example shown in FIG. 21, the serial numbers 1, 2, 3, and 4 may be set sequentially from the leftmost node, so that the insertion position information may indicate the value 3. It should be noted that the serial numbers may be global serial numbers for all the nodes in the slice.

The decoding device can then use the insertion position information to determine whether the current node is a non-default-width node. Furthermore, the adjusted width can be calculated in the manner illustrated with reference to FIG. 18.

For a plurality of non-default-width nodes disposed at a plurality of positions in a slice as illustrated in FIGS. 23 and 24, the insertion position information indicates the positions at which the respective non-default-width nodes are inserted. For example, in the example shown in FIG. 23, the insertion position information indicates the bit string "5b10001". In the example shown in FIG. 24, the insertion position information indicates the bit string "5b10010". It should be noted that, although the examples illustrated here use one bit string for one axis (the x axis in this example) (i.e., use a different bit string for each axis), one bit string may be used for all the nodes in the slice.

Furthermore, in the examples shown in FIGS. 23 and 24, the adjusted-width information indicates the adjusted width of each of the two non-default-width nodes. Specifically, the adjusted-width information indicates the value 2 as the adjusted width of a first non-default-width node, and the value 2 as the adjusted width of a second non-default-width node.

Alternatively, the adjusted-width information may indicate the sum of the adjusted widths of the two non-default-width nodes, and the adjusted width of one of the non-default-width nodes. This also allows the decoding device to calculate the adjusted widths of the two non-default-width nodes from the adjusted-width information. In this case, for example, a rule may be predetermined that specifies omitting information on the adjusted width of the non-default-width node located last among a series of non-default-width nodes on one axis. Based on this rule, the decoding device may calculate the adjusted widths of the two non-default-width nodes from the adjusted-width information. Furthermore, the non-default-width node information may include individual information on all the non-default-width nodes in the slice, rather than information on an axis basis.

For example, if the adjusted-width information on the fourth node is omitted in the example shown in FIG. 24, the adjusted width of the fourth node is obtained as the sum of the adjusted widths (4) - the adjusted width of the first node (2) = 2.

Furthermore, the starting position of the bounding box of a slice may have an offset from a slice boundary. FIG. 25 is a diagram illustrating an example of setting a non-default-width node in this case. The example shown in FIG. 25 illustrates a case in which the node at the terminal end of a slice is set as the non-default-width node.

In this case, the non-default-width node information includes the offset amount from the origin coordinate to the starting position of the bounding box of the slice. The decoding device can use this offset amount to calculate the adjusted width.

Specifically, the adjusted width is obtained as min (the slice width (100) - the node position (121) + the offset amount (25), the default width) = min (4, 32) = 4.

Furthermore, the decoding device may use the octree information to determine whether the current node is located at a slice end. For example, for one coordinate axis, a node at a slice end can be identified by referring to occupancy codes sequentially from the root node at the depth = 0 to follow nodes on only the side closer to the origin or the side farther from the origin. In this case, the non-default-width node information includes information indicating a fractional node width, which is the adjusted width of the node at the slice end. The decoding device uses this information to set the adjusted width of the node at the slice end to the fractional node width.

FIG. 26 is a diagram illustrating an example of setting a non-default-width node in this case. In this example, the fractional node width = 4. If the current node is at a slice end, the decoding device sets the width of the node to 4; otherwise, the decoding device sets the width of the node to 32.

Furthermore, the non-default width may have a value greater than the value of the default width. For example, in the example shown in FIG. 21, the third node may be integrated with the fourth node. That is, three nodes with their respective widths 32, 32, and 36, from the left, may be set.

Furthermore, a node may take a cubic shape as a result of adopting a non-default width for all the three axes, i.e., the x, y, and z axes, of the node.

Alternatively, instead of the slice width information, position information on node corners may be transferred so that the size of the non-default-width node can be reconstructed. For example, the position information may be coordinate information on two corners along the non-default width, or may be coordinate information on all the eight corners.

The encoding device may quantize the above non-default-width node information for use in the adjusted width calculation, and transfer the quantized information to the decoding device. The decoding device may then inverse-quantize the quantized information and use the resulting non-default-width node information to perform the above processing. In this case, the non-default-width node may have a blank region with the width not completely reduced to 0. Nevertheless, the quantization can reduce the data amount of the information to be transferred.

The non-default-width node information may be transferred based on a combination of the above concepts.

It should be noted that the default width (the default size) of the nodes depends on the size of the bounding box to be octree-encoded (the bit depth of the original data) and how deep the octree division is to be performed. The default width is represented by, for example, a power of 2.

Furthermore, the above description illustrates the non-default-width node in which the length of an edge along at least one of depth, width, and height is different from the default width. Alternatively, the length in only one direction or the lengths in only two directions may be different from the default width. That is, the non-default-width node may be of a rectangular parallelepiped shape.

Furthermore, although four edge vertexes on four parallel edges of a node are determined in the above description, the number of edge vertexes to be determined is not limited to four. Any number of edge vertexes that allow the determination of the approximate plane may be determined.

Furthermore, the manner of determining the centroid vertex is not limited to the above manner. The centroid vertex may be determined in other manners that allow the decoding device to determine the triangle planes.

Furthermore, although the TriSoup scheme is used as the compression scheme in the above description, the technique in the present embodiment is applicable to compression schemes other than the TriSoup scheme. That is, the technique in the present embodiment is applicable to compression schemes that approximate a point cloud on a plane or a curved surface within a node and that require edge vertexes for generating the plane or the curved surface.

Furthermore, although the non-default length of an edge of the non-default-width node is determined in the above description, the determination of the non-default length is not essential. What is required is to determine the shape of the non-default-width node; for example, the positions of both ends of an edge having a non-default length may be determined. That is, the position of the non-default-width node may be determined.

[Adjustment on the origin side]

FIG. 25 has been referred to for describing a case in which the starting position of the bounding box of a slice does not coincide with the origin. The following will describe this in detail.

The origin of a slice has its offset amount unspecified, so that the starting position of the bounding box of the slice does not necessarily coincide with the origin. As such, the point cloud in the slice after subtracting the offset amount may be distributed apart from the origin of the coding coordinate system. That is, the origin of the coding coordinate system may differ from the origin of the bounding box of the slice. Furthermore, in this case, the boundary of the bounding box of the slice might not coincide with a boundary of a leaf-node. It is then necessary to generate non-default-width nodes at both the origin side and the side farther from the origin of the bounding box of the slice.

The encoding device transfers, to the decoding device, information for enabling the decoding device to calculate the node positions and the node widths (the adjusted widths) of the above non-default-width nodes. Specifically, the encoding device transfers the slice position, which is the coordinate of the beginning of the bounding box of the slice, and the slice width, which is the width of the bounding box.

FIG. 27 is a diagram illustrating an example of setting non-default-width nodes in this case. In FIG. 27, the coding coordinate system is represented one-dimensionally. Furthermore, the shaded area is an area (a slice) in which a point cloud is distributed. Furthermore, the origin shown in FIG. 27 is the origin of the coding coordinate system.

Here, W denotes the default width of the nodes, A denotes the slice position, B denotes the slice width, and nodePos denotes the original node position. Then, the adjusted node position newNodePos and the adjusted node width newNodeWidth are obtained as follows.

$$\texttt{newNodePos = (nodePos < A) ? A : nodePos}$$

newNodeWidth = (nodePos < A) ? (W - (A - nodePos)) : min (A + B - nodePos + 1, W)

As above, the node position is adjusted to A if nodePos < A; otherwise, the node position is not adjusted. That is, the node position of node 1, which is the node at the beginning, is changed from P1 to A, whereas the node positions of the other nodes are left unchanged.

Furthermore, the node width is adjusted to (W - (A - nodePos)) if nodePos < A; otherwise, the node width is set to min (A + B - nodePos + 1, W). That is, the node width of node 1 is adjusted to W1 = W - (A - nodePos) = W - (A - P1). The node width of node 2, which is the node at the terminal end, is set to W2 = min (A + B - nodePos + 1, W) = A + B - P2 + 1. The node width of the other nodes is set to W. Here, "+ 1" is used because there is the relationship "the node width = the internal point coordinate width + 1". FIG. 28 is a diagram illustrating the relationship between the node width and the internal point coordinate width. For example, if W = 8, A = 0, B = 5, and nodePos = 0, then newNodeWidth = 6 as shown in FIG. 28.

Furthermore, if the header in the bitstream includes the non-default-width processing flag = 1, the decoding device determines A and B from the transfer information and uses the above equations to calculate the adjusted node positions and node widths of nodes 1 and 2 from the initial node positions and node widths of the nodes.

It should be noted that, again, non-default-width nodes may be located at the beginning, in the middle, or at both ends of the slice, or at a plurality of positions, as illustrated in FIGS. 21 to 24.

Furthermore, for a plurality of non-default-width nodes provided at a plurality of positions on the same axis, the node widths of these nodes may sum up to the above adjusted width.

In view of the above, the following will illustrate possible calculation manners and non-default-width node information, which is information stored in the bitstream and used for non-default-width nodes.

FIG. 29 is a diagram illustrating an example of setting non-default-width nodes. As shown in FIG. 29, the starting position of the bounding box of a slice has an offset from the origin in the slice boundary frame, and the slice width (95) is not an integer multiple of the default width (32) of the nodes. In this case, the encoding device may transfer, to the decoding device, the offset amount from the origin to the starting position of the bounding box. The decoding device can then calculate the adjusted position and the adjusted width of node 1 on the origin side.

Furthermore, the encoding device may transfer the slice width to the decoding device. The decoding device can then calculate the adjusted width of node 2 on the side farther from the origin.

Specifically, here, if the node position before adjustment of node 1 on the origin side is 32 as shown in FIG. 29, the adjusted position of node 1 = (32 < 37) ? 37 : 32 = 37. Furthermore, the adjusted width of node 1 = (32 < 37) ? (32 - (37 - 32)) : min (37 + 95 - 32 + 1, 32) = 27.

The adjusted position of node 2 on the side farther from the origin = (128 < 37) ? (32 - (37 - 128)) : min (37 + 95 - 128 + 1, 32) = 5.

Furthermore, in addition to the above information for calculation from the positional relationship between the node position and the slice bounding box, the non-default-width node information may include information designating the non-default-width nodes, and information indicating the adjusted positions and the adjusted widths of the designated nodes. For example, the information designating the non-default-width nodes indicates serial numbers assigned to the nodes.

FIG. 30 is a diagram illustrating an example of setting non-default-width nodes in this case. In the example shown in FIG. 30, the node numbers 0 to 3 are assigned to the nodes as serial numbers. P0 and WO denote the adjusted position and the adjusted width of the node having the node number = 0, and P1 and W1 denote the adjusted position and the adjusted width of the node having the node number = 3. Then, P0 = 37, WO = 27, P1 = 128, and W1 = 5 in the example shown in FIG. 30, and these information items are transferred.

It should be noted that the description with reference to FIG. 29 illustrates a manner of identifying the non-default-width nodes and a manner of calculating the positions and widths of the nodes; however, the non-default-width nodes may be identified in any of the manners described with reference to FIGS. 21 to 26.

Furthermore, the following will describe transfer information to be transferred from the encoding device to the decoding device for implementing the above manner. FIG. 31 is a diagram illustrating an example of a syntax of the GPS (geometry_parameter_set) and the GDU header.

The GPS includes a first non-default-width processing flag and a second non-default-width processing flag. The first non-default-width processing flag is information indicating whether the above-described adjustment of the node position and the node width is performed for the node located at the slice end on the side closer to the origin. For example, the value 1 indicates that the adjustment is performed, whereas the value 0 indicates that the adjustment is not performed.

The second non-default-width processing flag is information indicating whether the above-described adjustment of the node width is performed for the node located at the slice end on the side farther from the origin. For example, the value 1 indicates that the adjustment is performed, whereas the value 0 indicates that the adjustment is not performed.

If the first non-default-width processing flag is 1, the GDU header includes first bit length information, a first quantization parameter, and slice position information.

The slice position information indicates a slice position, which is the position (the coordinates) of the bounding box of the slice. For example, this information indicates the three-dimensional coordinates (the x, y, and x coordinates) of the corner closest to the origin, among the corners of the bounding box of the slice.

The first bit length information indicates the bit length of the slice position information. The first quantization parameter indicates a quantization parameter (a quantization value) used to quantize the slice position information.

If the second non-default-width processing flag is 1, the GDU header includes second bit length information, a second quantization parameter, and slice width information.

The slice width information indicates a slice width, which is the width of the bounding box of the slice. For example, the slice width information indicates the widths in the x, y, and z directions of the bounding box.

The second bit length information indicates the bit length of the slice width. The second quantization parameter indicates a quantization parameter used to quantize the slice width information.

Here, the slice position is represented as the slice position information << the first quantization parameter, and the slice width is represented as the slice width information < < the second quantization parameter.

It should be noted that the description here illustrates an example in which these information items are stored on a slice basis. If these information items are common to a plurality of slices, these information items may be stored in a header higher than the GDU header, such as the SPS or GPS. Furthermore, a flag indicating whether these information items are stored in a higher header or on a slice basis may be stored in the SPS or GPS. In that case, where these information items are stored is switched based on the flag. Furthermore, these information items may be provided individually for each of the x, y, and z axes.

Furthermore, the encoding device need not transfer the first non-default-width processing flag and the second non-default-width processing flag illustrated in FIG. 31. In that case, if the first quantization parameter = 0, the decoding device does not perform the above-described adjustment of the node position and the node width for the node located at the slice end on the side closer to the origin; otherwise, the decoding device performs the adjustment. Furthermore, if the second quantization parameter = 0, the decoding device does not perform the above-described adjustment of the node width for the node located at the slice end on the side farther from the origin; otherwise, the decoding device performs the adjustment.

Furthermore, because the slice position information and the slice width information are numerical values in the coding coordinate system, these information items may be defined as positive values.

[Omission of transfer and processing]

In the above description, a point cloud being encoded always requires storing the slice width information and the slice position information in the header, and the positions and widths of all the nodes in all the slices need to be recalculated. In practice, the starting end of a slice being encoded may coincide with the origin, or the terminal end of the slice may happen to coincide with the terminal end of a node. Such a case eliminates the need for the processing of adjusting the node position or the node width of the node at the starting end or terminal end of the slice. It is then possible to omit the transfer of the information for the adjustment processing, and omit the processing of recalculating the node position or the node width.

The encoding device determines whether to perform the above omission, and transfers information indicating the determination result to the decoding device. The information may be transferred using a dedicated flag or using the above-described first bit length information and the second bit length information. Specifically, the first bit length information indicating 0 means omitting the transfer of the slice position information, and the second bit length information indicating 0 means omitting the transfer of the slice width information. This can reduce the data amount of the header and the time required for the encoding processing.

FIG. 32 is a diagram illustrating an example of a slice and nodes in which the starting end of the slice coincides with the origin. In this case, no adjustment processing is needed for the starting end.

FIG. 33 is a diagram illustrating an example of a slice and nodes in which the starting end of the slice coincides with the origin, and the terminal end of the slice coincides with the terminal end of a node. In this case, no adjustment processing is needed for both the starting end and the terminal end.

FIG. 34 is a diagram illustrating an example of processing (a syntax) for the above omission. In the diagram, slice_bb_pos_bits denotes the first bit length information indicating the bit length of the slice position information, and slice_bb_width_bits denotes the second bit length information indicating the bit length of the slice width information. Furthermore, A denotes the slice position, B denotes the slice width, nodePos denotes the node position (the node position before adjustment), nodeWidth denotes the node width (the node width before adjustment), newNodeWidth denotes the adjusted node width, and W denotes the default width of the nodes.

In this processing, the adjustment processing is performed only if the bit length of the slice position information takes a value greater than 0. This can reduce the time required for the encoding processing. Furthermore, this can reduce the data amount of the header if the starting end of the slice coincides with the origin, or if the terminal end of the slice happens to coincide with the terminal end of a node.

FIG. 35 is a diagram illustrating an example of a syntax of the GPS and the GDU header in this case. Compared to the syntax shown in FIG. 31, the syntax shown in FIG. 35 includes the following additional conditions: the first quantization parameter and the slice position information are stored in the GDU header only if the first bit length information is greater than 0; and the second quantization parameter and the slice width information are stored in the GDU header only if the second bit length information is greater than 0.

The above additional conditions allow a reduction in the data amount of the header if the starting end of the slice coincides with the origin, or if the terminal end of the slice coincides with the terminal end of a node.

FIG. 36 is a flowchart of processing for determining the omission of the adjustment processing for the starting end (the transfer of the slice position). The encoding device determines whether the starting position of the slice (the coordinates of the starting end of the bounding box of the slice) coincides with the origin (S201).

If the starting position of the slice coincides with the origin (Yes at S201), the encoding device does not transfer the slice position information (S202). That is, the encoding device stores slice_bb_pos_bits = 0 in the bitstream and does not store the slice position information in the bitstream.

In contrast, if the starting position of the slice does not coincide with the origin (No at S201), the encoding device transfers the slice position information (S203). That is, the encoding device stores, in the bitstream, slice_bb_pos_bits that is set to a value greater than 0 and the slice position information.

It should be noted that the above determination may be performed only if the first non-default-width processing flag is 1. Furthermore, if the first non-default-width processing flag is 0, the slice position information is not transferred.

FIG. 37 is a flowchart of processing for determining omission of the adjustment processing for the terminal end (the transfer of the slice width). The encoding device determines whether the ending position of the slice (the coordinates of the terminal end of the bounding box of the slice) coincides with the terminal end of a node (S211).

If the ending position of the slice coincides with the terminal end of a node (Yes at S211), the encoding device does not transfer the slice width information (S212). That is, the encoding device stores slice_bb_width_bits = 0 in the bitstream and does not store the slice width information in the bitstream.

In contrast, if the ending position of the slice does not coincide with the terminal end of a node (No at S211), the encoding device transfers the slice width information (S213). That is, the encoding device stores, in the bitstream, slice_bb_width_bits that is set to a value greater than 0 and the slice width information.

It should be noted that the above determination may be performed only if the second non-default-width processing flag is 1. Furthermore, if the second non-default-width processing flag is 0, the slice position information is not transferred.

FIG. 38 is a flowchart of node position determination processing. For example, the processing illustrated in FIG. 38 is performed for each node.

First, the encoding device determines whether the first bit length information (slice_bb_pos_bits) is greater than 0 (S221).

If the first bit length information is greater than 0 (Yes at S221), the encoding device determines whether the node position (nodePos) of the current node is smaller than the slice position (S222).

If the node position is smaller than the slice position (Yes at S222), the encoding device sets the adjusted node position to the slice position (S223).

In contrast, if the first bit length information is 0 (No at S221) or if the node position is greater than or equal to the slice position (No at S222), the encoding device does not change (adjust) the node position (S224).

It should be noted that the same processing is performed in the decoding device.

FIG. 39 is a flowchart of node width determination processing. For example, the processing illustrated in FIG. 39 is performed for each node.

First, the encoding device determines whether the first bit length information (slice_bb_pos_bits) is greater than 0 (S231).

If the first bit length information is greater than 0 (Yes at S231), the encoding device determines whether the node position (nodePos) of the current node is smaller than the slice position (S232).

If the node position is smaller than the slice position (Yes at S232), the encoding device sets the adjusted node width (nodeWidth) to the default width (W) - (the slice position (A) - the node position (nodePos)) (S233).

In contrast, if the node position is greater than or equal to the slice position (No at S232), the encoding device determines whether the second bit length information (slice_bb_width_bits) is greater than 0 (S234).

If the second bit length information is greater than 0 (Yes at S234), the encoding device sets the node width (nodeWidth) to min (slice position (A) + slice width (B) - node position (nodePos) + 1, default width (W)) (S235).

In contrast, if the second bit length information is 0 (No at S234), the encoding device does not change the node width (nodeWidth) (S236). That is, the encoding device sets the node width to default width (W).

Furthermore, if first bit length information is 0 (No at S231), the encoding device determines whether the second bit length information (slice_bb_width_bits) is greater than 0 (S237). It should be noted that, if the first bit length information is 0 (No at S231), this is the case in which the slice position information is not transferred and in which the starting end of the slice coincides with the origin.

If the second bit length information is greater than 0 (Yes at S237), the encoding device sets the node width (nodeWidth) to min (slice width (B) - node position (nodePos) + 1, default width (W)) (S238).

In contrast, if the second bit length information is 0 (No at S237), the encoding device does not change the node width (nodeWidth) (S236). That is, the encoding device sets the node width to the default width (W).

[Conclusion]

As described above, the decoding device (three-dimensional data decoding device) according to the embodiment performs the process illustrated in FIG. 40. The decoding device is a decoding device that decodes three-dimensional points. The decoding device: obtains, from a bitstream, nodes that have an octree structure and are included in a first slice (S301); obtains, from the bitstream, information for deriving a shape of a first node among the nodes (S302); and decodes the first node according to the information (S303). The shape of the first node is different from a default shape of an other node among the nodes. Accordingly, a node that is of a shape different from the default shape can be set. Therefore, a variable node can be set in accordance with the size of a slice or the distribution condition of a point cloud. Therefore, it may be possible to improve coding efficiency.

For example, the shape of the first node is a rectangular parallelepiped shape, and is not a cubic shape. For example, an end of the first slice coincides with an end of a node among the nodes. Accordingly, when the node end and the slice end do not coincide, the node end and the slice end can be made to coincide with each other. Therefore, since failure to generate a vertex in the node end can be inhibited, the occurrence of a blank region at a slice boundary can be suppressed. Therefore, the accuracy of point cloud to be decoded can be improved.

For example, the size of the shape of the first node is different from the default size of the default shape. For example, the length of the edge of the shape of the first node is different from a default length (for example, a default width) of the edge of the default shape.

For example, the information for deriving the shape of the first node indicates a size of the shape of the first node or positions of both ends of an edge of the first node. Accordingly, the decoding device can generate a node that is of a shape different from the default shape by using the information.

Furthermore, the information for deriving the shape of the first node includes adjustment information (for example, slice width information or slice position information) for adjusting the default shape to the shape of the first node. Accordingly, the decoding device can generate a node that is of a shape different from the default shape by using the adjustment information. Furthermore, it may be possible to reduce the information amount compared to when the absolute amount of information on positions is to be sent.

For example, the decoding of the first node is performed according to a compression scheme in which the three-dimensional points approximated with a plane or a curved surface within the first node. For example, the compression scheme is a Triangle-Soup compression scheme.

For example, the shape of the first node is determined in order that the plane or the curved surface is generated within the first node. Accordingly, by setting a node that is of a shape different from the default shape, the plane or the curved surface can be generated within the first node.

For example, an edge of the shape of the first node has a vertex thereon, and the plane or the curved surface intersects with the edge at the vertex. Accordingly, by setting a node that is of a shape different from the default shape, the plane or the curved surface can be generated within the first node. For example, the three-dimensional points include a first three-dimensional point located in the vicinity of the vertex.

For example, the first node is provided in contact with a second slice adjacent to the first slice. Accordingly, for example, this can prevent failure to generate a vertex at a node end due to misalignment between the node end and a slice end, thereby preventing the occurrence of a blank region at the slice boundary. For example, if only default-shape nodes are provided around the slice boundary, the slice boundary may divide a node. This may reduce the accuracy of reconstructing the three-dimensional point cloud around the slice boundary, because the point cloud in the second slice adjacent to the first slice cannot be used to encode or decode the first node. To address this, this aspect sets a node of a shape different from the default shape to enable, for example, an end of the first node to coincide with an end of the first slice. This can prevent a reduction in the accuracy of reconstructing the three-dimensional point cloud around the slice boundary. It should be noted that applying this aspect to the TriSoup scheme can prevent failure to appropriately generate edge vertexes.

Furthermore, the information for deriving the shape of the first node is provided per slice, the information for the second slice is used to derive a shape of a second node among nodes that have the octree structure and are included in the second slice, and the shape of the second node is different from the default shape. Accordingly, the shape of a node can be set per slice.

For example, the size of the default shape is represented by a power of 2, and the size of the shape is different from a size represented by a power of 2.

For example, the shape of the first node is defined by a first length along a first direction, a second length along a second direction, and a third length along a third direction, the first direction, the second direction, and the third direction being orthogonal to each other, and, among the first length, the second length, and the third length, only the first length is different from a default length of the other node, or among the first length, the second length, and the third length, only the first length and the second length are each different from the default length.

For example, among the nodes, the first node is provided closest to an origin of the first slice in one direction among a first direction, a second direction, and a third direction, the first direction, the second direction, and the third direction being orthogonal to each other. Accordingly, when the starting position of a slice does not coincide with the origin, the starting position of the node can be adjusted in accordance with the starting position of the slice, for example. It should be noted that the origin is a position that serves as a reference for defining the position or shape of a slice, a node, or a three-dimensional point.

For example, the nodes include a third node that is of a shape different from the default shape, and among the nodes, the third node is provided farthest from the origin in the one direction. Accordingly, when the ending position of a slice does not coincide with the ending position of a node, the ending position of the node can be adjusted in accordance with the ending position of the slice, for example.

For example, when a starting position of the first slice does not coincide with an origin, the bitstream includes the information for deriving the shape of the first node, and when the starting position of the first slice coincides with the origin, the bitstream does not include the information for deriving the shape of the first node. Accordingly, the occurrence of processing for adjusting the shape of the node can be reduced. Furthermore, the transfer of information for deriving the shape of the node can be omitted. Therefore, the reduction of processing amount and the reduction of the data amount of the bitstream can be realized. It should be noted that the starting position (starting end) of a slice is the position of the end of the slice which is closer to the origin, and the ending position (ending end) of a slice is the position of the end of the slice which is farther from the origin. In the same manner, the starting position (starting end) of a node is the position of the end of the node which is closer to the origin, and the ending position (ending end) of a node is the position of the end of the node which is farther from the origin.

For example, when an ending position of the first slice does not coincide with an ending end of the first node, the bitstream includes the information for deriving the shape of the first node, and when the ending position of the first slice coincides with the ending end of the first node, the bitstream does not include the information for deriving the shape of the first node. Accordingly, the occurrence of processing for adjusting the shape of the node can be reduced. Furthermore, the transfer of information for deriving the shape of the node can be omitted. Therefore, the reduction of processing amount and the reduction of the data amount of the bitstream can be realized.

FIG. 41 is a block diagram of decoding device 10. For example, decoding device 10 includes processor 11 and memory 12, and processor 11 performs the above-described processes using memory 12.

Furthermore, the encoding device (three-dimensional data encoding device) according to the embodiment performs the process illustrated in FIG. 42. The encoding device is an encoding device that encodes three-dimensional points. The encoding device:

encodes nodes that have an octree structure and are included in a first slice, to generate a bitstream (S311); and stores, in the bitstream, information for deriving a shape of a first node among the nodes (S312). The shape of the first node is different from a default shape of an other node among the nodes. Accordingly, a node that is of a shape different from the default shape can be set. Therefore, a variable node can be set in accordance with the size of a slice or the distribution condition of a point cloud. Therefore, it may be possible to improve coding efficiency. Furthermore, the encoding device may perform the same processes as the above-described decoding device.

FIG. 43 is a block diagram of encoding device 20. For example, encoding device 20 includes processor 21 and memory 22, and processor 21 performs the above-described processes using memory 22.

An encoding device (three-dimensional data encoding device), a decoding device (three-dimensional data decoding device), and the like, according to embodiments of the present disclosure and variations thereof have been described above, but the present disclosure is not limited to these embodiments, etc.

Note that each of the processors included in the encoding device, the decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as an encoding method (three-dimensional data encoding method), a decoding method (three-dimensional data decoding method), or the like executed by the encoding device (three-dimensional data encoding device), the decoding device (three-dimensional data decoding device), and the like.

Furthermore, the present disclosure may be implemented as a program for causing a computer, a processor, or a device to execute the above-described encoding method or decoding method. Furthermore, the present disclosure may be implemented as a bitstream generated by the above-described encoding method. Furthermore, the present disclosure as a recording medium on which the program or the bitstream is recorded. For example, the present disclosure may be implemented as a non-transitory computer-readable recording medium on which the program or the bitstream is recorded.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

[Industrial Applicability]

The present disclosure is applicable to an encoding device and a decoding device.

[Reference Signs List]

| 10 | decoding device |
|---|---|
| 11, 21 | processor |
| 12, 22 | memory |
| 20 | encoding device |

| 101 | target space |
| 102, 133 | point cloud |
| 103, 111, 132 | point |
| 104 | leaf-node |
| 112 | edge vertex |
| 113, 122 | range |
| 121 | approximate plane |
| 123 | vertex information |
| 131 | triangle |
| 201 | region |

**Claims**

1. A decoding method for decoding three-dimensional points, the decoding method comprising:

   obtaining, from a bitstream, nodes that have an octree structure and are included in a first slice;
   obtaining, from the bitstream, information for deriving a shape of a first node among the nodes; and
   decoding the first node according to the information, wherein
   the shape is different from a default shape of an other node among the nodes.

2. The decoding method according to claim 1, wherein
   the shape is a rectangular parallelepiped shape, and is not a cubic shape.

3. The decoding method according to claim 1, wherein
   an end of the first slice coincides with an end of a node among the nodes.

4. The decoding method according to claim 1, wherein
   the information indicates a size of the shape or positions of both ends of an edge of the first node.

5. The decoding method according to claim 1, wherein
   the information includes adjustment information for adjusting the default shape to the shape.

6. The decoding method according to claim 1, wherein
   the decoding is performed according to a compression scheme in which the three-dimensional points approximated
   with a plane or a curved surface within the first node.

7. The decoding method according to claim 6, wherein
   the compression scheme is a Triangle-Soup compression scheme.

8. The decoding method according to claim 6, wherein
   the shape is determined in order that the plane or the curved surface is generated within the first node.

9. The decoding method according to claim 8, wherein

   an edge of the shape has a vertex thereon, and
   the plane or the curved surface intersects with the edge at the vertex.

10. The decoding method according to claim 1, wherein
    the first node is provided in contact with a second slice adjacent to the first slice.

11. The decoding method according to claim 10, wherein

    the information is provided per slice,
    the information for the second slice is used to derive a shape of a second node among nodes that have the octree
    structure and are included in the second slice, and
    the shape of the second node is different from the default shape.

12. The decoding method according to claim 1, wherein

a size of the default shape is represented by a power of 2, and
a size of the shape is different from a size represented by a power of 2.

13. The decoding method according to claim 1, wherein

the shape of the first node is defined by a first length along a first direction, a second length along a second direction, and a third length along a third direction, the first direction, the second direction, and the third direction being orthogonal to each other, and
among the first length, the second length, and the third length, only the first length is different from a default length of the other node, or
among the first length, the second length, and the third length, only the first length and the second length are each different from the default length.

14. The decoding method according to claim 1, wherein
among the nodes, the first node is provided closest to an origin of the first slice in one direction among a first direction, a second direction, and a third direction, the first direction, the second direction, and the third direction being orthogonal to each other.

15. The decoding method according to claim 14, wherein

the nodes include a third node that is of a shape different from the default shape, and
among the nodes, the third node is provided farthest from the origin in the one direction.

16. The decoding method according to claim 1, wherein

when a starting position of the first slice does not coincide with an origin, the bitstream includes the information, and
when the starting position of the first slice coincides with the origin, the bitstream does not include the information.

17. The decoding method according to claim 1, wherein

when an ending position of the first slice does not coincide with an ending end of the first node, the bitstream includes the information, and
when the ending position of the first slice coincides with the ending end of the first node, the bitstream does not include the information.

18. An encoding method for encoding three-dimensional points, the encoding method comprising:

encoding nodes that have an octree structure and are included in a first slice, to generate a bitstream; and
storing, in the bitstream, information for deriving a shape of a first node among the nodes, wherein
the shape is different from a default shape of an other node among the nodes.

19. A decoding device that decodes three-dimensional points, the decoding device comprising:

a processor; and
memory, wherein
using the memory, the processor:

obtains, from a bitstream, nodes that have an octree structure and are included in a first slice;
obtains, from the bitstream, information for deriving a shape of a first node among the nodes; and
decodes the first node according to the information, wherein

the shape is different from a default shape of an other node among the nodes.

20. An encoding device that encodes three-dimensional points, the encoding device comprising:

a processor; and
memory, wherein

using the memory, the processor:

encodes nodes that have an octree structure and are included in a first slice, to generate a bitstream; and
stores, in the bitstream, information for deriving a shape of a first node among the nodes, wherein

the shape is different from a default shape of an other node among the nodes.

FIG. 1

FIG. 2

FIG. 3

FIG. 4

# FIG. 5

# FIG. 6

# FIG. 7

# FIG. 8

FIG. 9

Slice boundary

# FIG. 10

Slice boundary

Node 1

Node 2

v2

v1

Default width

Default width

Node position

FIG. 11

FIG. 12

FIG. 13

201

FIG. 14

Slice boundary

Non-default width

v2

v1

Node 1

Node 2

# FIG. 15

# FIG. 16

# FIG. 17

```
geometry_data_unit_header () {
  Non-default-width processing flag
  if (Non-default-width processing flag) {
    Slice width information (x axis)
    Slice width information (y axis)
    Slice width information (z axis)
  }
}
```

# FIG. 18

# FIG. 19

```
                    ( Start )
                        │
                        ▼                        ⌐S101
        ┌───────────────────────────────────────┐
        │ Generate trimmed octree and store      │
        │ octree information in GDU              │
        └───────────────────────────────────────┘
                        │
                        ▼                        ⌐S102
                   ◇ Is slice ◇
              width integer multiple of default  ──Yes──┐
                      width?                             │
                        │ No                             │
                        ▼                 ⌐S103          ▼                    ⌐S104
        ┌───────────────────────────────────┐   ┌──────────────────────────┐
        │ Store non-default-width processing │   │ Store non-default-width  │
        │ flag = 1 and slice width           │   │ processing flag = 0 in   │
        │ information in GDU header           │   │ GDU header               │
        └───────────────────────────────────┘   └──────────────────────────┘
                        │◄──────────────────────────────────┘
                        ▼
        ┌───────────────────────────────────────┐
        │ Start of loop processing for each node │
        └───────────────────────────────────────┘
                        │
                        ▼                        ⌐S105
                ◇ Non-default-width ◇
                processing flag = 1?      ──No──────────────┐
                        │ Yes                               │
                        ▼                ⌐S106               │
                ◇ Current node ◇                            │
                located at slice end?     ──No──────┐        │
                        │ Yes                        │        │
                        ▼             ⌐S107          ▼        ▼      ⌐S108
        ┌────────────────────────────────────┐   ┌──────────────────────┐
        │ Calculate adjusted width from slice │   │ Set width of current │
        │ width information and node position, │   │ node to default width│
        │ and set non-default-width node       │   └──────────────────────┘
        └────────────────────────────────────┘           │
                        │◄─────────────────────────────────┘
                        ▼
        ┌───────────────────────────────────────┐
        │ Generate edge vertexes and centroid    │  ~S109
        │ vertex                                 │
        └───────────────────────────────────────┘
                        │
                        ▼
        ┌───────────────────────────────────────┐
        │ End of loop processing for each node   │
        └───────────────────────────────────────┘
                        │
                        ▼
        ┌───────────────────────────────────────┐
        │ Store vertex information in GDU        │  ~S110
        └───────────────────────────────────────┘
                        │
                        ▼
        ┌───────────────────────────────────────┐
        │ Output bitstream including GDU header  │  ~S111
        │ and GDU                                │
        └───────────────────────────────────────┘
                        │
                        ▼
                    ( End )
```

# FIG. 20

Start

S121
Obtain GDU header and GDU from bitstream

S122
Non-default-width processing flag = 1 ? — No

Yes

S123
Obtain slice width information from GDU header

Obtain octree information from GDU and generate group of leaf-nodes of trimmed octree — S124

Start of loop processing for each node

S125
Non-default-width processing flag = 1 ? — No

Yes

S126
Current node located at slice end? — No

Yes

S127
Calculate adjusted width from slice width information and node position, and set non-default-width node

S128
Set width of current node to default width

Obtain vertex information from GDU — S129

Connect vertexes to generate group of triangles — S130

End of loop processing for each node

Generate points at regular intervals on surface of each triangle — S131

End

# FIG. 21

# FIG. 22

# FIG. 23

y axis

| 2 | 32 | 32 | 32 | 2 |

Slice width (x axis) = 100

x axis

0

# FIG. 24

y axis

| 2 | 32 | 32 | 2 | 32 |

Slice width (x axis) = 100

x axis

0

# FIG. 25

y axis

121

Offset = 25

32 | 32 | 32 | 4

Slice width (x axis) = 100

0

x axis

# FIG. 26

y axis

Fractional node width = 4

32 | 32 | 32 | 4

0

x axis

# FIG. 27

Node 1

Slice

W

Node 2

P1

W1

Slice position (A)

P2

W2

Origin

Slice width (B)

0    A    A + B

# FIG. 28

newNodeWidth = 6

0    5

# FIG. 29

# FIG. 30

# FIG. 31

```
geometry_parameter_set () {
  :
  First non-default-width processing flag
  Second non-default-width processing flag
  :
}


geometry_data_unit_header () {
  :
  :
  if ( First non-default-width processing flag ) {
     First bit length information
     First quantization parameter
     for ( k = 0; k < 3; k + + ) {
       Slice position information [k]
    }
  }
  if ( Second non-default-width processing flag ) {
     Second bit length information
     Second quantization parameter
     for ( k=0; k < 3; k + + ) {
       Slice width information [k]
    }
  }
  :
  :
}
```

# FIG. 32

Node     Slice

0                                          x axis

# FIG. 33

Node     Slice

0                                          x axis

# FIG. 34

```
newNodePos = ( ( slice_bb_pos_bits > 0 ) && ( nodePos <
A ) ) ? A : nodePos;
if ( slice_bb_pos_bits > 0 ) {
 if ( nodePos < A ) {
  newNodeWidth = W - ( A - nodePos );
 } else {
  if ( slice_bb_width_bits > 0 ) {
   newNodeWidth = min ( A + B - nodePos + 1, W );
  } else {
   newNodeWidth = nodeWidth;
  }
 }
} else {
 if ( slice_bb_width_bits > 0 ) {
  newNodeWidth = min ( B - nodePos + 1, W );
 } else {
  newNodeWidth = nodeWidth;
 }
}
```

## FIG. 35

```
geometry_parameter_set () {
  :
  First non-default-width processing flag
  Second non-default-width processing flag
  :
}


geometry_data_unit_header () {
  :
  :
  if ( First non-default-width processing flag ) {
    First bit length information
    if ( First bit length information > 0 ) {
     First quantization parameter
     for ( k = 0; k < 3; k + + ) {
       Slice position information [k]
     }
    }
  }
  if ( Second non-default-width processing flag ) {
    Second bit length information
    if ( Second bit length information > 0 ) {
     Second quantization parameter
     for ( k = 0; k < 3; k + + ) {
       Slice width information [k]
     }
    }
  }
  :
  :
}
```

# FIG. 36

```
              ┌──────────┐
              │  Start   │
              └──────────┘
                   │
                   ▼
                         S201
             ╱Starting ╲
           ╱ position of slice coincide ╲        No
          ╱      with origin      ╲──────────────┐
           ╲        ?        ╱                    │
             ╲           ╱                        │
                   │ Yes                          │
                   ▼         S202                 ▼         S203
      ┌───────────────────────────┐   ┌───────────────────────────┐
      │ Do not transfer slice     │   │ Transfer slice position   │
      │  position information     │   │ information               │
      │ (slice_bb_pos_bits = 0)   │   │ (slice_bb_pos_bits > 0)   │
      └───────────────────────────┘   └───────────────────────────┘
                   │                               │
                   ▼◄──────────────────────────────┘
              ┌──────────┐
              │   End    │
              └──────────┘
```

FIG. 37

```
            ┌─────────────┐
            │    Start    │
            └──────┬──────┘
                   │
                   ▼              ⌐S211
              ╱─────────────╲
            ╱    Ending       ╲
          ╱ position of slice   ╲  No
        ╱  coincide with terminal ╲────────────┐
          ╲   end of node?      ╱               │
            ╲─────────────────╱                 │
                   │ Yes                         │
                   ▼          ⌐S212              ▼          ⌐S213
        ┌──────────────────────┐    ┌──────────────────────┐
        │ Do not transfer slice│    │ Transfer slice width │
        │ width information     │    │ information          │
        │ (slice_bb_width_bits  │    │ (slice_bb_width_bits │
        │  = 0)                 │    │  > 0)                │
        └──────────┬───────────┘    └──────────┬───────────┘
                   │◄──────────────────────────┘
                   ▼
            ┌─────────────┐
            │     End     │
            └─────────────┘
```

## FIG. 38

```
            ┌─────────────┐
            │    Start    │
            └─────────────┘
                   │
                   ▼
              ╱╲  S221
            ╱      ╲
          ╱  slice_bb  ╲        No
        ╱ _pos_bits > 0 ╲──────────────────────┐
          ╲      ?      ╱                       │
            ╲        ╱                          │
              ╲    ╱                            │
                │ Yes                           │
                ▼                               │
              ╱╲  S222                          │
            ╱      ╲                            │
          ╱ nodePos <  ╲       No               │
        ╱ Slice position ╲──────────────┐       │
          ╲      ?      ╱                │       │
            ╲        ╱                   ▼       │
              ╲    ╱                            │
                │ Yes                           ▼
                ▼                    S224
   ┌──────────────────────┐  S223  ┌──────────────────────────┐
   │ nodePos = Slice      │        │ Do not change node       │
   │      position        │        │      position            │
   └──────────────────────┘        └──────────────────────────┘
                │                               │
                ▼◄──────────────────────────────┘
         ┌─────────────┐
         │     End     │
         └─────────────┘
```

FIG. 39

Start

S231 — slice_bb_pos _bits > 0?
No → (to S237)
Yes ↓

S232 — nodePos < Slice position?
No → (to S234)
Yes ↓

S233 — nodeWidth = W - (A - nodePos)

S234 — slice_bb_width_ bits > 0?
No → (to S236)
Yes → S235 — nodeWidth = min (A + B - nodePos + 1, W)

S236 — Do not change node width

S237 — slice_bb_width_ bits > 0?
No
Yes → S238 — nodeWidth = min (B - nodePos + 1, W)

End

# FIG. 40

Start

S301

Obtain, from bitstream, nodes that have octree structure and are included in first slice

S302

Obtain, from bitstream, information for deriving shape of first node among nodes (shape of first node is different from default shape of another node among nodes)

S303

Decode first node according to information

End

# FIG. 41

10

Decoding device

11

Processor

12

Memory

# FIG. 42

Start

↓ S311

Encode nodes that have octree structure and are included in first slice, to generate bitstream

↓ S312

Store, in bitstream, information for deriving shape of first node among nodes
(shape of first node is different from default shape of another node among nodes)

↓

End

# FIG. 43

20

Encoding device

21

Processor

22

Memory

## INTERNATIONAL SEARCH REPORT

| International application No. |
| --- |
| **PCT/JP2023/025991** |

### A. CLASSIFICATION OF SUBJECT MATTER

*G06T 9/40*(2006.01)i
FI:   G06T9/40

According to International Patent Classification (IPC) or to both national classification and IPC

### B. FIELDS SEARCHED

Minimum documentation searched (classification system followed by classification symbols)

G06T9/40; H04N19/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2021/262559 A1 (SONY GROUP CORPORATION) 30 December 2021 (2021-12-30) pages 11, 12, fig. 10, 11 | 1-20 |
| A | US 2021/0049828 A1 (LG ELECTRONICS INC.) 18 February 2021 (2021-02-18) paragraphs [0322]-[0352], fig. 18, 19 | 1-20 |
| A | JP 2022-521680 A (TENCENT AMERICA LLC) 12 April 2022 (2022-04-12) paragraphs [0088], [0089], fig. 7 | 1-20 |
| A | US 2021/0321139 A1 (QUALCOMM INCORPORATED) 14 October 2021 (2021-10-14) entire text, all drawings | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 September 2023** | **26 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/025991**

| Patent document cited in search report | | | Publication date (day/month/year) | Patent family member(s) | | | Publication date (day/month/year) |
|---|---|---|---|---|---|---|---|
| WO | 2021/262559 | A1 | 30 December 2021 | US | 2021/0400280 | A1 | |
| | | | | CN | 114600163 | A | |
| | | | | KR | 10-2022-0127323 | A | |
| US | 2021/0049828 | A1 | 18 February 2021 | JP | 2022-544571 | A | |
| | | | | WO | 2021/029662 | A1 | |
| | | | | EP | 4002277 | A1 | |
| | | | | KR | 10-2021-0020815 | A | |
| | | | | CN | 114270832 | A | |
| JP | 2022-521680 | A | 12 April 2022 | US | 2020/0413096 | A1 | |
| | | | | paragraphs [0103], [0104], fig. 7 | | | |
| | | | | WO | 2020/264553 | A1 | |
| | | | | KR | 10-2021-0107864 | A | |
| | | | | CN | 113615181 | A | |
| US | 2021/0321139 | A1 | 14 October 2021 | WO | 2021/207406 | A2 | |
| | | | | CN | 115336278 | A | |
| | | | | KR | 10-2022-0164490 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014020663 A